(19) Europäisches Patentamt
European Patent Office
Office européen des brevets

(11) **EP 3 298 354 B1**

(12) **EUROPÄISCHE PATENTSCHRIFT**

(45) Veröffentlichungstag und Bekanntmachung des Hinweises auf die Patenterteilung:
**07.09.2022   Patentblatt 2022/36**

(21) Anmeldenummer: **16720865.1**

(22) Anmeldetag: **09.05.2016**

(51) Internationale Patentklassifikation (IPC):
**G01F 1/66** *(2022.01)*          **G01F 1/667** *(2022.01)*

(52) Gemeinsame Patentklassifikation (CPC):
**G01F 1/662; G01F 1/667**

(86) Internationale Anmeldenummer:
**PCT/EP2016/060295**

(87) Internationale Veröffentlichungsnummer:
**WO 2016/184709 (24.11.2016 Gazette 2016/47)**

(54) **MESSSYSTEM ZUM MESSEN WENIGSTENS EINES PARAMETERS EINES FLUIDS**

SYSTEM FOR MEASURING AT LEAST ONE PARAMETER OF A FLUID

SYSTÈME POUR MESURER AU MOINS UN PARAMÈTRE D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2015   DE 102015107750**

(43) Veröffentlichungstag der Anmeldung:
**28.03.2018   Patentblatt 2018/13**

(60) Teilanmeldung:
**22187465.4**

(73) Patentinhaber: **Endress+Hauser Flowtec AG
4153 Reinach (CH)**

(72) Erfinder:
• **PLOSS, Peter
   95445 Bayreuth (DE)**
• **RUPITSCH, Stefan J.
   90461 Nürnberg (DE)**
• **BEZDEK, Michal
   4147 Aesch (CH)**
• **FRÖHLICH, Thomas
   4142 Münchenstein (CH)**
• **KISSLING, Beat
   4153 Reinach (CH)**

(74) Vertreter: **Hahn, Christian et al
   Endress+Hauser Group Services
   (Deutschland)AG +Co. KG
   Colmarer Straße 6
   79576 Weil am Rhein (DE)**

(56) Entgegenhaltungen:
**DE-A1-102005 015 456     GB-A- 2 479 115
US-A- 4 930 358**

**Beschreibung**

Die Erfindung betrifft ein, insb. als Clamp-on-Ultraschall-Durchflußmeßgerät ausgebildetes, Meßsystem zum Messen wenigstens eines, insb. fluiddynamischen, Parameters, insb. eine Strömungsgeschwindigkeit und/oder eine Volumendurchflußrate, eines - insb. in einer Rohrleitung strömenden - Fluids, insb. einer Flüssigkeit, eines Gases, oder einer Dispersion.

In der industriellen Meß- und Automatisierungstechnik werden zum Messen Parameter von in einer Rohrleitung strömenden Fluiden, nicht zuletzt auch fluiddynamischer Parameter, wie z.B. einer Strömungsgeschwindigkeit und/oder einer Volumendurchflußrate, vielmals Meßsysteme verwendet, die mittels wenigstens zweier voneinander beabstandet jeweils außen an einem Rohr angebrachten Ultraschall-Wandler sowie einer mit jedem der beiden Ultraschall-Wandler elektrisch verbundenen Betriebs- und Meßelektronik gebildet sind. Solche Meßsysteme sind beispielsweise in der DE-A 10057188, der DE-A 102007062913, US-A 49 30 358, der US-A 2014/0366642, der US-A 2014/0123767, der WO-A 03/098166, der WO-A 2007/012506, der WO-A 2009/156250, der WO-A 2012/120039, der WO-A 2013/029664, der WO-A 2013/079264 oder auch der "IEEE TRANSACTIONS ON ULTRASONICS, FERROELECTRICS, AND FREQUENCY CONTROL, VOL. 43, NO. 4, JULY 1996 - Acoustic Transfer Function ofthe Clamp-On Flowmeter, Bernhard Funck und Andreas Mitzkus" ausführlich beschrieben und werden beispielsweise auch von der Anmelderin selbst als Clamp-on-Ultraschall-Durchflußmeßgeräte unter der Warenbezeichnung "Proline Prosonic Flow 91W', "Proline Prosonic Flow 93P", "Proline Prosonic Flow 93T", bzw. "Proline Prosonic Flow 93W' angeboten.

Meßsysteme der in Rede stehenden Art umfassen zumeist ein gerades, insb. hohlzylindrisches, Rohr mit einem von einer, beispielsweise aus einem Stahl bestehende, Rohrwand umgebenen, zumeist einem geraden Kreiszylinder entsprechenden, Lumen, welches Rohr dafür eingerichtet ist, in seinem Lumen ein Teilvolumen des Fluids zu führen bzw. vom Fluid durchströmt zu werden. Das Rohr kann dabei beispielsweise als ein eigenständiges Rohr, das in den Verlauf einer Rohrleitung eingesetzt ist, oder aber beispielsweise auch als ein Teilsegment einer bereits bestehenden Rohrleitung, mithin als ein integraler Bestandteil nämlicher Rohrleitung ausgebildet sein. Typische Rohrwandstärken liegen für solche Rohre etwa in einem Bereich von 2 mm bis zu einigen Zentimetern.

Jeder der wenigstens zwei Ultraschall-Wandler ist auf einer dem Lumen des Rohrs abgewandten Außenseite der Rohrwand am Rohr angebracht, beispielsweise nämlich aufgeschnallt oder aufgeklemmt, derart, daß jeder der Ultraschall-Wandler im Ergebnis via Rohrwand an im Lumen des Rohrs geführtes Fluid akustisch gekoppelt ist. Desweiteren ist jeder der Ultraschall-Wandler dafür eingerichtet, eine zeitlich ändernde elektrische Spannung in sich durch die Rohrwand und weiter durch im Lumen des Rohrs geführtes Fluid ausbreitende Ultraschallwellen zu wandeln, bzw. sich durch im Lumen des Rohrs geführtes Fluid und weiter durch die Rohrwand ausbreitende Ultraschallwellen zu empfangen und in eine zeitlich ändernde elektrische Spannung zu wandeln. Die wenigstens zwei Ultraschall-Wandler sind zudem so voneinander beabstandet auf der Außenseite der Rohrwand positioniert und so ausgerichtet, daß mittels eines der Ultraschall-Wandler bewirkte Ultraschallwellen innerhalb des im Lumen befindlichen Fluids anteilig entlang eines als Meßstrecke dienlichen Schallausbreitungspfad propagieren und hernach via Rohrwand in den anderen Ultraschall-Wandler akustisch einkoppeln.

Die zumeist baugleichen Ultraschall-Wandler sind typischerweise jeweils mittels wenigstens eines piezoelektrischen Wandlerelements, beispielsweise aus Blei-Zirkonat-Titanat (PZT - $Pb[Zr_xTi_{1-x}]O_3$) oder einer anderen Piezo-Keramik, sowie mittels eines mit dem Wandlerelement schallleitend gekoppelten Koppelkörpers, beispielsweise aus Polyetherimid (PEI), gebildet, der dafür ausgestaltet ist, einen möglichst gut schalleitenden, gleichwohl langzeitstabilen Kontakt zwischen Ultraschall-Wandler und Rohr bereitzustellen. Bei einem in einem als Clamp-on-Ultraschall-Durchflußmeßgerät ausgebildeten Meßsystem verwendeten Ultraschall-Wandler liegt eine Mittenfrequenz derzeit typischerweise in einem Bereich von etwa 0,5 - 6 MHz bei einer relativen Bandbreite, nämlich einer auf die jeweilige Mittenfrequenz bezogenen -6 dB-Bandbreite von etwa 20-30% der jeweiligen Mittenfrequenz.

Bei industriellen Meßsystemen der in Rede stehenden Art, ist jeder der beiden Ultraschallwandler typischerweise dafür eingerichtet, jeweils intermittierend als ein elektrische Leistung in Schallleistung wandelnder Sender bzw. als ein Schallleistung in elektrische Leistung wandelnder Empfänger betrieben zu werden, bzw. sind die beiden Ultraschallwandler dafür vorgesehen, alternierend als Sender bzw. Empfänger betrieben zu werden, derart, daß stets nur höchstens einer der beiden Ultraschall-Wandler Sender ist. Zum Bewirken einer als ein Empfangssignal des jeweils einen, als Empfänger betriebenen Ultraschall-Wandlers dienlichen zeitlich ändernden elektrischen Spannung an nämlichem Ultraschall-Wandler generiert die Betriebs- und Meßelektronik im Betrieb des Meßsystems zumindest zeitweise jeweils ein eine zeitlich veränderliche, beispielsweise auch bipolare, elektrische Spannung aufweisendes Treibersignal für den jeweils anderen, momentan entsprechend als Sender betriebenen Ultraschall-Wandler, beispielsweise derart, daß das jeweilige Treibersignal für den einen Ultraschall-Wandler zumindest für ein vorgegebenes Zeitintervall komplementär zu dem jeweiligen Treibersignal für den anderen Ultraschall-Wandler ausgebildet ist.

Meßsysteme der in Rede stehenden Art, nicht zuletzt auch als dem Messen fluiddynamischer Parameter dienliche Clamp-on-Ultraschall-Durchflußmeßgeräte ausgebildete Meßsysteme, ermitteln die jeweiligen Meßwerte oftmals basierend auf Laufzeiten ($t_{AB}$, $t_{BA}$), die innerhalb des Lumens des Rohrs propagierende Ultraschallwellen zum Durchqueren der in den jeweiligen Schallausbreitungspfad verorteten Meßstrecke benötigen bzw. anhand von Laufzeitdifferenzen ($t_{BA}$ - $t_{AB}$), nämlich anhand von Differenzen zwischen Laufzeiten ($t_{AB}$) von entlang der Meßstrecke in einer ersten Meßrichtung propagierenden Ultraschallwellen und Laufzeiten ($t_{BA}$) von entlang der Meßstrecke in einer der ersten Meßrichtung entgegengesetzten zweiten Meßrichtung propagierenden Ultraschallwellen. Dafür sind die wenigstens zwei Ultraschall-Wandler zumeist so auf der Außenseite der Rohrwand positioniert und so ausgerichtet, daß der jeweils als Meßstrecke dienliche Schallausbreitungspfad eine gegenüber einem Innendurchmesser des Rohrs um einen Strahlwinkel ($\alpha_F$) geneigte Hauptausbreitungsrichtung aufweist. Eine einer Pfadlänge des Schallausbreitungspfad entsprechende Länge (L) der Meßstrecke entspricht hierbei einem Quotienten (D / cos $\alpha_F$) nämlichen Innendurchmessers des Rohrs geteilt durch den Kosinus nämlichen Strahlwinkels. Die beiden Ultraschall-Wandler können, wie u.a. in der eingangs erwähnten WO-A 2013/079264 gezeigt, beispielsweise einander gegenüberliegend oder aber beispielsweise auch, wie u.a. in der eingangs erwähnten WO-A 2009/156250 bzw. WO-A 03/098166 gezeigt, auf einer gedachten Mantellinie des Rohrs entlang nämlicher Mantellinie beabstandet am Rohr positioniert sein, typischerweise so, daß der Schallausbreitungspfad auch einen Zentralbereich des Rohrs bzw. dessen Lumens quert bzw. so, daß eine gemessene Laufzeitdifferenz proportional zu einer mittleren Strömungsgeschwindigkeit des Fluids ist. Zur Messung der der Laufzeit werden bei herkömmlichen Meßsystemen gepulste, nämlich zu eine begrenzte Anzahl Schwingungen aufweisenden Wellenpakten formierte Ultraschallwellen verwendet. Die gelegentlich auch als Ultraschall-Burst bezeichneten Wellenpakete werden stoßweise mit einer vorgebbaren, zumeist über einen längeren Zeitraum konstant gehaltenen Schußrate generiert, beispielsweise indem das von der Betriebs- und Meßelektronik gelieferte Treibersignal für den jeweiligen Ultraschall-Wandler eine als eine Folge von in einem der Schußrate entsprechenden Takt zu Pulspaketen formierten rechteckförmigen oder sinusförmigen Spannungspulsen (Bursts) ausgebildete Spannung aufweist.

Unter Berücksichtigung der Schallgeschwindigkeit ($c_{FL}$) des im Lumen befindlichen Fluids, beispielsweise also 1484 m · s$^{-1}$ bei auf 20°C temperiertem Wasser, sowie einer momentanen mittleren Strömungsgeschwindigkeit ($V_0$) des Fluids entsprechen die Laufzeiten mit zumeist ausreichender Genauigkeit den bekannten Berechnungsvorschriften:

$$t_{AB} = \frac{L}{c_{FL} + V_0 \cdot \sin \alpha_F} \quad \text{bzw.} \quad t_{BA} = \frac{L}{c_{FL} - V_0 \cdot \sin \alpha_F}.$$

Daraus abgleitet können die fluiddynamischen Parameter mittlere Strömungsgeschwindigkeit ($V_0$) bzw. Volumendurchflußrate ($Q_V$) beispielsweise entsprechend den bekannten Berechnungsvorschriften:

$$V_0 = \frac{L}{2 \cdot \sin \alpha_F} \cdot \frac{t_{ba} - t_{ab}}{t_{ab} \cdot t_{ba}} \quad \text{bzw.} \quad Qv = \frac{\pi}{4} \cdot K \cdot D^2 \cdot V_0 = \frac{\pi}{4} \cdot K \cdot D^2 \cdot \frac{L}{2 \cdot \sin \alpha_F} \cdot \frac{t_{ba} - t_{ab}}{t_{ab} \cdot t_{ba}},$$

aber beispielsweise auch die das Fluid stofflich charakterisierende Schallgeschwindigkeit, beispielsweise nämlich basierend auf der Berechnungsvorschrift:

$$c_{FL} = \frac{L}{2} \cdot \left( \frac{1}{t_{ab}} + \frac{1}{t_{ba}} \right)$$

direkt ermittelt werden.

Der Strahlwinkel und damit einhergehend die Pfadlänge sind u.a. von der Ausrichtung der Ultraschall-Wandler relativ zum Rohr sowie von im Meßsystem etablierten, für die Schallausbreitung relevanten Schallgeschwindigkeiten bzw. akustischen Impedanzen des Meßsystems abhängig. In Kenntnis des tatsächlichen konstruktiven Aufbaus des Meßsystems und der Schallgeschwindigkeiten ($c_i$) bzw. Wellenzahlen ($k_i$) der verwendeten Materialien, einschließlich des im Lumen des Rohrs geführten Fluids, kann nämlicher Strahlwinkel in Form eines nominellen Strahlwinkels ($\alpha_{F,nom}$) vorab berechnet werden, beispielsweise in Anwendung eines ebene Wellenfronten unterstellenden strahlenakustischen Modellansatzes anhand des *Snellius'schen* Brechungsgesetzes für Akustik, um hernach zur Ermittlung des Meßwerts für den wenigstens einen Parameter entsprechend herangezogen werden zu können. Abgeleitet aus dem nominellen Strahlwinkel ($\alpha_{F,nom}$) kann zudem auch die Pfadlänge nominell bestimmt werden. Typischerweise werden nämlicher nomineller Strahlwinkel und nämliche nominelle Pfadlänge endgültig erst vor Ort, etwa im Zuge einer Inbetriebnahme des Meßsystems, numerisch ermittelt, beispielsweise anhand von den konstruktiven Aufbau des jeweiligen Meßsystems charakterisierenden Kenndaten sowie von entsprechenden nominellen Materialkennwerten für dessen Rohr und Fluid. Bei als Clamp-on-Ultraschall-Durchflußmeßgerät zum Messen fluiddynamischer Parameter von Wasser ausgebildeten Meßsystemen beispielsweise liegt der nominelle Strahlwinkel häufig bei etwa 20°.

Um die für industrielle Meßsysteme der in Rede stehenden Art geforderte hohe Genauigkeit, mit der der wenigstens eine Parameter gemessen werden soll, tatsächlich erreichen bzw. einen entsprechend geforderten geringen Meßfehler einhalten zu können, sind, neben einer hochgenauen Messung der Laufzeiten entlang der jeweiligen Meßstrecke propagierenden Ultraschallwellen, u.a. auch möglichst genaue Kenntnisse des Übertragungsverhaltens bzw. der Übertragungsfunktion jedes der Ultraschallwandler, der geometrischen Abmessungen des Rohrs wie auch der für die Messung relevanten Schallgeschwindigkeiten bzw. Wellenzahlen des gesamten Meßsystems erforderlich. Im besonderen ist es zudem aber auch erforderlich, sicherzustellen, daß der während der Messung im Meßsystem tatsächlich etablierte Strahlwinkel ($\alpha_F$) möglichst exakt dem zur Berechnung der Meßwerte für den Parameter angesetzten nominellen Strahlwinkel ($\alpha_{F,nom}$) entspricht bzw. eine zwischen dem nominellen Strahlwinkel ($\alpha_{F,nom}$) und dem tatsächlichen Strahlwinkel ($\alpha_F$) existierende Winkelabweichung ($\Delta\alpha_F$) möglichst klein ist.

Ein besonderes Problem von Meßsystemen der in Rede stehenden Art besteht u.a. darin, daß, wie beispielsweise auch in der eingangs erwähnen "IEEE TRANSACTIONS ON ULTRASONICS, FERROELECTRICS, AND FREQUENCY CONTROL, VOL. 43, NO. 4, JULY 1996 - Acoustic Transfer Function of the Clamp-On Flowmeter, Bernhard Funck und Andreas Mitzkus" erörtert, dem Rohr naturgemäß ein Vielzahl von Schwingungsmoden innewohnen, in denen die Rohrwand jeweils Lamb-Wellen, nämlich gemischte Druck- und Scherwellen ausbildende Schwingungen ausführt bzw. ausführen kann, derart, daß die Rohrwand jeweils sowohl in radialer Richtung als auch in einer Längsrichtung des Rohrs ausgelenkt wird (Lamb-Wellen-Schwingungsmoden). Nämliche Lamb-Wellen können sowohl symmetrische Wellen (S0, S1, S2, ...Sn) als auch asymmetrische Wellen (A0, A1, A2, ...An) sein. Zumeist mehrere der vorbezeichneten Lamb-Wellen-Schwingungsmoden können jeweils Resonanzfrequenzen aufweisen, die innerhalb der Bandbreite des jeweiligen Ultraschall-Wandlers, mithin in der Nähe von dessen Mittenfrequenz, bzw. innerhalb der Bandbreite der jeweils angeregten Ultraschallwellen liegen, wobei die tatsächlichen Resonanzfrequenzen der Lamb-Wellen-Schwingungsmoden bzw. eine jeweilige Lage von deren Resonanzfrequenzen im Frequenzbereich regelmäßig nur ungefähr vorab ermittelbar sind, etwa anhand der vorbezeichneten Kenndaten bzw. Materialkennwerte des Meßsystems. Aufgrund dessen ist zum einen ein Anregen mehrerer Lamb-Wellen-Schwingungsmoden praktisch unvermeidlich, zum anderen ist aber auch nicht exakt vorhersehbar, mit welcher Intensität die jeweiligen Lamb-Wellen-Schwingungsmoden im Betrieb jeweils tatsächlich angeregt werden, mithin ist vorab auch nicht ohne weiteres bestimmbar, mit welcher Intensität und Ausbreitungsrichtung die einzelnen spektralen Anteile der mittels des jeweiligen Ultraschall-Wandlers angeregten Ultraschallwellen tatsächlich durch das Lumen propagieren. Infolgedessen kann der tatsächlich etablierte Strahlwinkel schon bei sehr geringfügigen, nämlich innerhalb üblicher technischer Toleranzgrenzen liegender, Abweichungen des konstruktiven Aufbau des jeweiligen Meßsystems bzw. der Stoffeigenschaften der in die Ausbreitung der Ultraschallwellen involvierten Materialen von den jeweiligen Nominalwerten signifikant, nämlich die Meßgenauigkeit (bzw. umgekehr den Meßfehler) nennenswert beeinflussend von dem zuvor berechneten nominellen Strahlwinkel abweichen, ohne daß dies im normalen Betrieb detektiert werden könnte. Als weitere, die Unsicherheit über Anzahl und Intensität der tatsächlich angeregten Lamb-Wellen-Schwingungsmoden, mithin die Unsicherheit über die Abweichung des tatsächlichen Strahlwinkels vom nominellen Strahlwinkel weiter erhöhende Einflußfaktoren sind u.a. auch eine Temperaturverteilung innerhalb der Rohrwand, des Fluids bzw. der Ultraschallwandler sowie auch die tatsächliche Ausbildung von zwischen jedem der Ultraschallwandler und der Rohrwand jeweils gebildeten Kontaktflächen zu nennen.

Um die vorbezeichneten Störeinflüsse von Lamb-Wellen-Schwingungsmoden auf die Meßgenauigkeit zu minimieren wird bei einigen konventionellen Meßsystemen der in Rede stehenden Art, nicht zuletzt auch bei in der industriellen Meßtechnik eingesetzten konventionellen Clamp-on-Ultraschall-Durchflußmeßgeräten, das Treibersignal mittels der Betriebs- und Meßelektronik so generiert, beispielsweise durch entsprechend angepaßtes Formieren der vorbezeichneten Pulspakete bzw. Bursts, daß im Ergebnis das jeweilige Empfangssignal eine maximale Signalleistung aufweist oder zumindest eine vorgegebene Mindest-Signalleistung erreicht. Die dafür erforderlichen Einstellparameter für die Betriebs- und Meßelektronik werden zumeist durch ein entsprechendes Einmessen des Meßsystems vor Ort ermittelt, etwa durch ein iteratives Abgleichen des jeweiligen Treibersignals basierend auf während der Inbetriebnahme des Meßsystems für das jeweilige Empfangssignal ermittelten diskreten Fourier-Transformationen (DFT) bzw. diskreten Leistungsdichtespektren (PSD). Allerdings hat sich gezeigt, daß basierend auf den in konventionellen Meßsystemen zur Optimierung des Treibersignals bislang angewendeten Kriterien Winkelabweichung ($\Delta\alpha_F$) von wesentlich kleiner als 0,4°, mithin relative Meßfehler von deutlich weniger als 2 % derzeit kaum realisierbar bzw. realisiert sind.

Ausgehend vom vorbezeichneten Stand der Technik besteht eine Aufgabe der Erfindung darin, Meßsysteme der in Rede stehenden Art, nicht zuletzt auch als Clamp-on-Ultraschall-Durchflußmeßgeräte ausgebildete Meßsysteme dahingehend zu verbessern, daß Winkelabweichungen von weniger als 0,4° bzw. relative Meßfehler von weniger als 2%, insb. weniger als 1,5%, erreicht werden können; dies im besonderen auch unter Verwendung konventioneller Ultraschall-Wandler bzw. unter Beibehaltung bis anhin bei konventionellen Meßsystemen etablierter mechanischer Konstruktionen bzw. Konstruktionsprinzipien.

Zur Lösung der Aufgabe besteht die Erfindung in einem, beispielsweise als Clamp-on-Ultraschall-Durchflußmeßgerät ausgebildeten, Meßsystem zum Messen wenigstens eines, insb. fluiddynamischen, Parameters, insb. eine Strömungsgeschwindigkeit und/oder eine Volumendurchflußrate, eines - insb. in einer Rohrleitung strömenden

- Fluids, insb. einer Flüssigkeit, eines Gases, oder einer Dispersion gemäß dem unabhängigen Anspruch 1. Das erfindungsgemäße Meßsystem umfaßt:

ein Rohr mit einem von einer Rohrwand umgebenen Lumen, welches Rohr dafür eingerichtet ist, in seinem Lumen ein Teilvolumen des Fluids zu führen bzw. vom Fluid durchströmt zu werden;

einen auf einer dem Lumen des Rohrs abgewandten Außenseite der Rohrwand am Rohr angebrachten, via Rohrwand an im Lumen des Rohrs geführtes Fluid akustisch gekoppelten ersten Ultraschall-Wandler, der dafür eingerichtet ist, eine zeitlich ändernde, insb. gepulste, elektrische Spannung in sich durch die Rohrwand und weiter durch im Lumen des Rohrs geführtes Fluid ausbreitende Ultraschallwellen zu wandeln;

einen im Abstand zum ersten Ultraschallwandler auf der Außenseite der Rohrwand am Rohr angebrachten, via Rohrwand an im Lumen des Rohrs geführtes Fluid akustisch gekoppelten, beispielsweise zum ersten Ultraschallwandler baugleichen, zweiten Ultraschall-Wandler, der dafür eingerichtet ist, sich durch im Lumen des Rohrs geführtes Fluid und weiter durch die Rohrwand ausbreitende Ultraschallwellen zu empfangen und in eine zeitlich ändernde elektrische Spannung zu wandeln;

sowie eine sowohl mit dem ersten Ultraschall-Wandler als auch dem zweiten Ultraschall-Wandler elektrisch verbundene, beispielsweise mittels eines digitalen Signalprozessors und/oder eines Mikrocontrollers gebildete, Betriebs- und Meßelektronik. Die Betriebs- und Meßelektronik des erfindungsgemäßen Meßsystems ist im besonderen dafür eingerichtet, zum Bewirken eines eine zeitlich ändernde elektrischen Spannung aufweisenden Empfangssignals des zweiten Ultraschall-Wandlers zumindest zeitweise ein eine zeitlich veränderliche, beispielsweise bipolare und/oder gepulste, elektrische Spannung aufweisendes Treibersignal für den ersten Ultraschall-Wandler zu generieren, derart,

daß sowohl nämliches Treibersignal als auch nämliches Empfangssignal jeweils eine Vielzahl spektraler Signalkomponenten gleichwohl jeweils eine dominierende, nämlich eine jeweils maximale spektrale Leistungsdichte aufweisende, spektrale Signalkomponente enthalten,

und daß eine Frequenz der dominierenden Signalkomponente des Treibersignals für den ersten Ultraschall-Wandler um einen Betrag von nicht mehr als |±100 kHz|, insb. um einen Betrag von weniger als |±50 kHz|, von einer Frequenz der dominierenden Signalkomponente des Empfangssignals des zweiten Ultraschall-Wandlers und/oder um nicht mehr als 10 %, insb. um weniger als 5 %, der Frequenz der dominierenden Signalkomponente des Empfangssignals des zweiten Ultraschall-Wandlers von nämlicher Frequenz abweicht. Desweiteren ist die Betriebs- und Meßelektronik dafür eingerichtet, die Frequenz der dominierenden Signalkomponente des Treibersignals für den ersten Ultraschall-Wandler zu ändern, um eine Abweichung nämlicher Frequenz von der Frequenz der dominierenden Signalkomponente des Empfangssignals des zweiten Ultraschall-Wandlers zu verringern und/oder derart, daß eine zunächst zu große Abweichung nämlicher Frequenz von der Frequenz der dominierenden Signalkomponente des Empfangssignals des zweiten Ultraschall-Wandlers minimiert wird, und ist die Betriebs- und Meßelektronik ferner dafür eingerichtet mittels des Empfangssignals des zweiten Ultraschall-Wandlers wenigstens einen Meßwert für den wenigstens einen Parameter zu erzeugen.

Darüberhinaus besteht Erfindung auch darin, ein solches erfindungsgemäßes Meßsystems zum Messen einer Strömungsgeschwindigkeit und/oder einer Volumendurchflußrate und/oder einer Dichte eines in einer Rohrleitung strömenden Fluids, beispielsweise einer Flüssigkeit, eines Gases, oder einer Dispersion, zu verwenden.

Nach einer ersten Ausgestaltung der Erfindung ist ferner vorgesehen, daß der erste Ultraschallwandler eine sich zwischen einer unteren ersten Grenzfrequenz nämlichen Ultraschallwandlers und einer oberen zweiten Grenzfrequenz nämlichen Ultraschallwandlers erstreckende 6dB-Bandbreite und der zweite Ultraschallwandler eine sich zwischen einer unteren ersten Grenzfrequenz nämlichen Ultraschallwandlers und einer oberen zweiten Grenzfrequenz nämlichen Ultraschallwandlers erstreckende 6dB-Bandbreite aufweisen, und daß die Betriebs- und Meßelektronik eingerichtet ist, das Treibersignal für den ersten Ultraschall-Wandler so zu generieren, beispielsweise nämlich die Frequenz der dominierenden Signalkomponente des Treibersignals für den ersten Ultraschall-Wandler so einzustellen, daß die Frequenz der dominierenden Signalkomponente des Treibersignals für den ersten Ultraschall-Wandler um nicht mehr als 10 %, insb. um weniger als 5 %, einer Mittenfrequenz der 6dB-Bandbreite des ersten Ultraschall-Wandlers, definiert als ein geometrisches Mittel von dessen erster Grenzfrequenz und dessen zweiter Grenzfrequenz, von der Frequenz der dominierenden Signalkomponente des Empfangssignals abweicht.

Nach einer zweiten Ausgestaltung der Erfindung ist ferner vorgesehen, daß der erste Ultraschallwandler eine sich zwischen einer unteren ersten Grenzfrequenz nämlichen Ultraschallwandlers und einer oberen zweiten Grenzfrequenz nämlichen Ultraschallwandlers erstreckende 6dB-Bandbreite und der zweite Ultraschallwandler eine sich zwischen einer unteren ersten Grenzfrequenz nämlichen Ultraschallwandlers und einer oberen zweiten Grenzfrequenz nämlichen Ultraschallwandlers erstreckende 6dB-Bandbreite aufweisen, und daß die Betriebs- und Meßelektronik eingerichtet ist, das Treibersignal für den ersten Ultraschall-Wandler so zu generieren, beispielsweise nämlich die Frequenz der dominierenden Signalkomponente des Treibersignals für den ersten Ultraschall-Wandler so einzustellen, daß die Frequenz der dominierenden Signalkomponente des Treibersignals für den ersten Ultraschall-Wandler um nicht mehr als 10 %, insb. um weniger als 5 %, einer Mittenfrequenz der 6dB-Bandbreite des zweiten Ultraschall-Wandlers, definiert als ein geometrisches Mittel von dessen erster Grenzfrequenz und dessen zweiter Grenzfrequenz, von der Frequenz der dominierenden Signalkomponente des Empfangssignals abweicht.

Nach einer dritten Ausgestaltung der Erfindung ist ferner vorgesehen, daß der zweite Ultraschall-Wandler dafür eingerichtet ist, intermittierend, insb. komplementär zum ersten Ultraschall-Wandler, als ein Schallleistung in elektrische Leistung wandelnder Empfänger bzw. als ein elektrische Leistung in Schallleistung wandelnder Sender betrieben zu werden.

Nach einer vierten Ausgestaltung der Erfindung ist ferner vorgesehen, daß die Betriebs- und Meßelektronik dafür eingerichtet ist, ein Amplitudenspektrum des Empfangssignals des zweiten Ultraschall-Wandlers zu ermitteln.

Nach einer fünften Ausgestaltung der Erfindung ist ferner vorgesehen, daß die Betriebs- und Meßelektronik dafür eingerichtet ist, eine Leistung und/oder eine Amplitude der dominierenden Signalkomponente des Empfangssignals des zweiten Ultraschall-Wandlers zu ermitteln, beispielsweise basierend auf einem Amplitudenspektrum nämlichen Empfangssignals.

Nach einer sechsten Ausgestaltung der Erfindung ist ferner vorgesehen, daß die Betriebs- und Meßelektronik dafür eingerichtet ist, die Frequenz der dominierenden Signalkomponente des Empfangssignals des zweiten Ultraschall-Wandlers zu ermitteln, beispielsweise basierend auf einem Amplitudenspektrum nämlichen Empfangssignals.

Nach einer siebenten Ausgestaltung der Erfindung ist ferner vorgesehen, daß die Betriebs- und Meßelektronik dafür eingerichtet ist, die Spannung des Treibersignals für den ersten Ultraschall-Wandler zu modulieren, beispielsweise nämlich zu takten und/oder derart, daß nämliche Spannung als eine Folge von jeweils zwei oder mehr rechteckförmigen Spannungspulsen aufweisenden und/oder in einem vorgegebenen zeitlichen Abstand aufeinanderfolgenden Pulspaketen ausgebildet ist.

Nach einer achten Ausgestaltung der Erfindung ist ferner vorgesehen, daß die Betriebs- und Meßelektronik dafür eingerichtet ist, das Treibersignal für den ersten Ultraschall-Wandler so zu generieren, daß die dominierende Signalkomponente nämlichen Treibersignals zunächst eine initiale, nämlich auf einen vorgegebenen, beispielsweise basierend auf Kenndaten des Rohrs vorab ermittelter und/oder in einem einen nicht-flüchtigen Datenspeicher der Betriebs- und Meßelektronik vorgehaltenen, Startfrequenzwert justierte Frequenz aufweist, derart, daß eine Abweichung nämlicher initialen Frequenz der dominierenden Signalkomponente des Treibersignals für den ersten Ultraschall-Wandler von der Frequenz der dominierenden Signalkomponente des Empfangssignals des zweiten Ultraschall-Wandlers größer als eine dafür momentan erreichbare minimale Abweichung ist und/oder derart, daß eine Abweichung der Frequenz der dominierende Signalkomponente des Treibersignals für den ersten Ultraschall-Wandler von der Frequenz der dominierende Signalkomponente des Empfangssignals des zweiten Ultraschall-Wandlers zunächst mehr als $|\pm 100$ kHz$|$ und/oder mehr als 10 % der Frequenz der dominierenden Signalkomponente des Empfangssignals des zweiten Ultraschall-Wandlers beträgt. Diese Ausgestaltung der Erfindung weiterbildend ist die Betriebs- und Meßelektronik desweiteren dafür eingerichtet, ausgehend von nämlicher initialen Frequenz die Frequenz der dominierenden Signalkomponente des Treibersignals für den ersten Ultraschall-Wandler zumindest solange zu ändern - beispielsweise nämlich sukzessive zu erhöhen oder sukzessive zu verringern - bis die Frequenz der dominierenden Signalkomponente des Treibersignals für den ersten Ultraschall-Wandler um nicht mehr als $|\pm 100$ kHz$|$, beispielsweise auch um weniger als $|\pm 50$ kHz$|$, von der Frequenz der dominierenden Signalkomponente des Empfangssignals des zweiten Ultraschall-Wandlers und/oder um nicht mehr als 10 %, beispielsweise auch um weniger als 5 %, der Frequenz der dominierenden Signalkomponente des Empfangssignals des zweiten Ultraschall-Wandlers von nämlicher Frequenz abweicht und/oder bis eine zunächst zu große Abweichung der Frequenz der dominierenden Signalkomponente des Treibersignals für den ersten Ultraschall-Wandler von der Frequenz der dominierenden Signalkomponente des Empfangssignals des zweiten Ultraschall-Wandlers auf eine dafür momentan erreichbare minimale Abweichung eingestellt ist.

Nach einer neunten Ausgestaltung der Erfindung ist ferner vorgesehen, daß die Betriebs- und Meßelektronik dafür eingerichtet ist, die elektrische Spannung des Treibersignals für den ersten Ultraschall-Wandler zu modulieren, derart daß die elektrische Spannung als eine Folge von, beispielsweise zu in einem vorgegebenen zeitlichen Abstand aufeinanderfolgenden Pulspaketen formierten und/oder rechteckförmigen, Spannungspulsen ausgebildet ist, und ist vorgesehen, daß die Betriebs- und Meßelektronik dafür eingerichtet ist, die Frequenz der dominierenden Signalkomponente des Treibersignals für den ersten Ultraschall-Wandler zeitlich zu ändern, indem zeitlich aufeinanderfolgend generierte Spannungspulse unterschiedliche Pulsbreiten aufweisen.

Nach einer zehnten Ausgestaltung der Erfindung ist ferner vorgesehen, daß die Betriebs- und Meßelektronik dafür eingerichtet ist, die Spannung des Treibersignals für den ersten Ultraschall-Wandler zu modulieren, derart, daß nämliche Spannung als eine Folge von, beispielsweise jeweils zwei oder mehr rechteckförmigen Spannungspulsen aufweisenden und/oder in einem vorgegebenen zeitlichen Abstand aufeinanderfolgenden, Pulspaketen ausgebildet ist. Diese Ausgestaltung der Erfindung weiterbildend ist ferner vorgesehen, daß die Betriebs- und Meßelektronik dafür eingerichtet ist, die Frequenz der dominierenden Signalkomponente des Treibersignals für den ersten Ultraschall-Wandler zeitlich zu ändern, indem zu einem ersten Pulspaket formierte rechteckförmige Spannungspulse mit einer Pulsbreite generierte werden, die von einer Pulsbreite, mit der dem ersten Pulspaket zeitlich nachfolgend generierte, beispielsweise zu einem zweiten Pulspaket, formierte rechteckförmige Spannungspulse generiert werden, abweicht.

Nach einer elften Ausgestaltung der Erfindung ist ferner vorgesehen, daß der zweite Ultraschall-Wandler dafür eingerichtet ist, eine zeitlich ändernde elektrische Spannung in sich durch die Rohrwand und weiter durch im Lumen des Rohrs geführtes Fluid ausbreitende Ultraschallwellen zu wandeln, und daß der erste Ultraschall-Wandler dafür eingerichtet ist, sich durch im Lumen des Rohrs geführtes Fluid und weiter durch die Rohrwand ausbreitende Ultraschallwellen zu empfangen und in eine zeitlich ändernde elektrische Spannung zu wandeln.

Nach einer zwölften Ausgestaltung der Erfindung ist ferner vorgesehen, daß die Betriebs- und Meßelektronik dafür eingerichtet ist, zum Bewirken eines eine zeitlich ändernde elektrischen Spannung aufweisenden Empfangssignals des ersten Ultraschall-Wandlers zumindest zeitweise, beispielsweise komplementär zum Treibersignal für den ersten Ultraschall-Wandler, ein eine zeitlich veränderliche, beispielsweise bipolare und/oder gepulste, elektrische Spannung aufweisendes, beispielsweise zum Treibersignal für den ersten Ultraschall-Wandler zumindest für ein vorgegebenes Zeitintervall komplementäres, Treibersignal für den zweiten Ultraschall-Wandler zu generieren. Diese Ausgestaltung der Erfindung weiterbildend ist ferner vorgesehen, daß die Betriebs- und Meßelektronik dafür eingerichtet ist, den wenigstens einen Meßwert sowohl mittels des Empfangssignals des zweiten Ultraschall-Wandlers als auch mittels des Empfangssignals des ersten Ultraschall-Wandlers zu erzeugen, beispielsweise basierend auf einer anhand des Empfangssignals des zweiten Ultraschall-Wandlers und des Empfangssignals des ersten Ultraschall-Wandlers ermittelten Laufzeitdifferenz zwischen sich durch im Lumen des Rohrs geführtes Fluid entlang einer vorgegebenen Meßstrecke, gleichwohl in entgegengesetzten Richtungen ausbreitende Ultraschallwellen und/oder basierend auf einer Kreuzkorrelation des Empfangssignals des zweiten Ultraschall-Wandlers und des Empfangssignals des ersten Ultraschall-Wandlers. Alternativ oder in Ergänzung kann die Betriebs- und Meßelektronik auch dafür eingerichtet sein, den wenigstens einen Meßwert sowohl mittels des Treibersignals für den ersten Ultraschall-Wandler sowie des Empfangssignals des zweiten Ultraschall-Wandlers als auch mittels des Treibersignals für den zweiten Ultraschall-Wandler sowie des Empfangssignals des ersten Ultraschall-Wandlers zu erzeugen, beispielsweise basierend auf sowohl einer anhand des Treibersignals für den ersten Ultraschall-Wandler und des Empfangssignals des zweiten Ultraschall-Wandlers ermittelten Laufzeit für sich durch im Lumen des Rohrs geführtes Fluid entlang einer vorgegebenen Meßstrecke in Richtung vom ersten Ultraschall-Wandler hin zum zweiten Ultraschall-Wandler ausbreitende Ultraschallwellen als auch basierend auf einer anhand des Treibersignals für den zweiten Ultraschall-Wandler und des Empfangssignals des ersten Ultraschall-Wandlers ermittelten Laufzeit für sich durch im Lumen des Rohrs geführtes Fluid entlang nämlicher Meßstrecke in Richtung vom zweiten Ultraschall-Wandler hin zum ersten Ultraschall-Wandler ausbreitende Ultraschallwellen.

Nach einer dreizehnten Ausgestaltung der Erfindung ist vorgesehen, daß die Betriebs- und Meßelektronik dafür eingerichtet ist, zum Bewirken eines eine zeitlich ändernde elektrischen Spannung aufweisenden Empfangssignals des ersten Ultraschall-Wandlers zumindest zeitweise, beispielsweise komplementär zum Treibersignal für den ersten Ultraschall-Wandler, ein eine zeitlich veränderliche, beispielsweise bipolare und/oder gepulste, elektrische Spannung aufweisendes, beispielsweise zum Treibersignal für den ersten Ultraschall-Wandler zumindest für ein vorgegebenes Zeitintervall komplementäres, Treibersignal für den zweiten Ultraschall-Wandler zu generieren, und ist ferner vorgesehen, daß die Betriebs- und Meßelektronik dafür eingerichtet ist, das Treibersignal für den zweiten Ultraschall-Wandler so zu generieren, daß sowohl nämliches Treibersignal als auch nämliches Empfangssignal des ersten Ultraschall-Wandlers jeweils eine Vielzahl spektraler Signalkomponenten gleichwohl jeweils eine dominierende, nämlich eine jeweils maximale spektrale Leistungsdichte aufweisende, spektrale Signalkomponente enthalten. Diese Ausgestaltung der Erfindung weiterbilden ist ferner vorgesehen, daß die Betriebs- und Meßelektronik dafür eingerichtet ist, die Spannung des Treibersignals für den zweiten Ultraschall-Wandler zu modulieren, beispielsweise zu takten und/oder derart, daß nämliche Spannung als eine Folge von jeweils zwei oder mehr rechteckförmigen Spannungspulsen aufweisenden und/oder in einem vorgegebenen zeitlichen Abstand aufeinanderfolgenden Pulspaketen ausgebildet ist. Alternativ oder in Ergänzung kann die die Betriebs- und Meßelektronik ferner dafür eingerichtet sein , eine als Treibersignal, $x_B(t)$, für den zweiten Ultraschall-Wandler (B) dienliche Folge von, beispielsweise jeweils zwei oder mehr Rechteckpulsen aufweisenden, Pulspaketen zu generieren, und/oder die Frequenz der dominierenden Signalkomponente des Treibersignals für den zweiten Ultraschall-Wandler zu ändern, beispielsweise um eine Abweichung nämlicher Frequenz von der Frequenz der dominierenden Signalkomponente des Empfangssignals des ersten Ultraschall-Wandlers zu verringern, und/oder das Treibersignal für den zweiten Ultraschall-Wandler komplementär zum Treibersignal für den ersten Ultraschall-Wandler zu generieren.

Nach einer vierzehnten Ausgestaltung der Erfindung ist vorgesehen, daß die Betriebs- und Meßelektronik dafür eingerichtet ist, zum Bewirken eines eine zeitlich ändernde elektrischen Spannung aufweisenden Empfangssignals des ersten Ultraschall-Wandlers zumindest zeitweise, beispielsweise komplementär zum Treibersignal für den ersten Ultraschall-Wandler, ein eine zeitlich veränderliche, beispielsweise bipolare und/oder gepulste, elektrische Spannung aufweisendes, beispielsweise zum Treibersignal für den ersten Ultraschall-Wandler zumindest für ein vorgegebenes Zeitintervall komplementäres, Treibersignal für den zweiten Ultraschall-Wandler zu generieren, und ist ferner vorgesehen, daß die Betriebs- und Meßelektronik dafür eingerichtet ist, das Treibersignal für den zweiten Ultraschall-Wandler so zu generieren, daß sowohl nämliches Treibersignal als auch nämliches Empfangssignal des ersten Ultraschall-Wandlers jeweils eine Vielzahl spektraler Signalkomponenten gleichwohl jeweils eine dominierende, nämlich eine jeweils maximale spektrale Leistungsdichte aufweisende, spektrale Signalkomponente enthalten, und daß eine Frequenz der dominierenden Signalkomponente des Treibersignals für den zweiten Ultraschall-Wandler um nicht mehr als einen Betrag von |±100 kHz|, insb. um einen Betrag von weniger als |±50 kHz|, von einer Frequenz der dominierenden Signalkomponente des Empfangssignals des ersten Ultraschall-Wandlers und/oder um nicht mehr als als 10 %, insb. um weniger als 5 %, der Frequenz der dominierenden Signalkomponente des Empfangssignals des ersten Ultraschall-Wandlers von nämlicher Frequenz abweicht. Alternativ oder in Ergänzung ist die Betriebs- und Meßelektronik ferner dafür eingerichtet, das Treibersignal für den ersten Ultraschall-Wandler und das Treibersignal für den zweiten Ultraschall-Wandler jeweils so zu generieren, daß eine Frequenz der dominierenden Signalkomponente des Treibersignals für den zweiten Ultraschall-Wandler um einen Betrag von nicht mehr als |±50 kHz|, insb. um einen Betrag weniger als |±10 KHz|, von einer Frequenz der dominierenden Signalkomponente des Treibersignals für den ersten Ultraschall-Wandler und/oder um nicht mehr als 1 % der Frequenz der dominierenden Signalkomponente des Treibersignals für den ersten Ultraschall-Wandler von nämlicher Frequenz abweicht.

Nach einer fünfzehnten Ausgestaltung der Erfindung ist vorgesehen, daß die Betriebs- und Meßelektronik dafür eingerichtet ist, zum Bewirken eines eine zeitlich ändernde elektrischen Spannung aufweisenden Empfangssignals des ersten Ultraschall-Wandlers zumindest zeitweise, beispielsweise komplementär zum Treibersignal für den ersten Ultraschall-Wandler, ein eine zeitlich veränderliche, beispielsweise bipolare und/oder gepulste, elektrische Spannung aufweisendes, beispielsweise zum Treibersignal für den ersten Ultraschall-Wandler zumindest für ein vorgegebenes Zeitintervall komplementäres, Treibersignal für den zweiten Ultraschall-Wandler zu generieren, und ist ferner vorgesehen, daß die Betriebs- und Meßelektronik dafür eingerichtet ist, das Treibersignal für den zweiten Ultraschall-Wandler so zu generieren, daß sowohl nämliches Treibersignal als auch nämliches Empfangssignal des ersten Ultraschall-Wandlers jeweils eine Vielzahl spektraler Signalkomponenten gleichwohl jeweils eine dominierende, nämlich eine jeweils maximale spektrale Leistungsdichte aufweisende, spektrale Signalkomponente enthalten, sowie das Empfangssignal des ersten Ultraschall-Wandlers in ein nämliches Empfangssignal repräsentierendes digitales Empfangssignal zu wandeln, und den wenigstens einen Meßwert für den wenigstens einen Parameter mittels nämlichen, das Empfangssignal des ersten Ultraschall-Wandlers repräsentierenden digitalen Empfangssignals zu erzeugen. Diese Ausgestaltung der Erfindung weiterbildend ist ferner vorgesehen, daß die Betriebs- und Meßelektronik eingerichtet ist, eine diskrete Fourier-Transformation (DFT) des das Empfangssignal des ersten Ultraschall-Wandlers repräsentierenden digitalen Empfangssignals zu generieren, sowie die Frequenz der dominierenden Signalkomponente des Empfangssignals des ersten Ultraschall-Wandlers basierend auf nämlicher Fourier-Transformation zu ermitteln.

Nach einer sechzehnten Ausgestaltung der Erfindung ist ferner vorgesehen, daß die Betriebs- und Meßelektronik dafür eingerichtet ist, das Empfangssignal des zweiten Ultraschall-Wandlers in ein nämliches Empfangssignal repräsentierendes digitales Empfangssignal zu wandeln, sowie den wenigstens einen Meßwert für den wenigstens einen Parameter mittels nämlichen, das Empfangssignal des zweiten Ultraschall-Wandlers repräsentierenden digitalen Empfangssignals zu erzeugen. Diese Ausgestaltung der Erfindung weiterbilden ist ferner vorgesehen, daß die Betriebs-und Meßelektronik eingerichtet ist, eine diskrete Fourier-Transformation (DFT) des das Empfangssignal des zweiten Ultraschall-Wandlers repräsentierenden digitalen Empfangssignals zu generieren, sowie die Frequenz und/oder eine Amplitude und/oder eine Leistung der dominierenden Signalkomponente des Empfangssignals des zweiten Ultraschall-Wandlers basierend auf nämlicher diskreten Fourier-Transformation zu ermitteln.

Nach einer siebzehnten Ausgestaltung der Erfindung ist ferner vorgesehen, daß dem Rohr Lamb-Wellen-Schwingungsmoden innewohnen, in denen die Rohrwand Lamb-Wellen ausbildende Schwingungen ausführt bzw. ausführen kann, und daß die Betriebs- und Meßelektronik dafür eingerichtet ist, das Treibersignal für den ersten Ultraschall-Wandler so zu generieren, daß die Frequenz der dominierenden Signalkomponente nämlichen Treibersignals um einen Betrag von weniger als |±100 kHz|, insb. um einen Betrag weniger als |±50 kHz|, von einer Resonanzfrequenz eines der Lamb-Wellen-Schwingungsmoden und/oder um weniger als 10 %, insb. um weniger als 5 %, einer Resonanzfrequenz eines der Lamb-Wellen-Schwingungsmoden von nämlicher Resonanzfrequenz abweicht. Diese Ausgestaltung der Erfindung weiterbilden ist ferner vorgesehen, daß eine Mittenfrequenz einer 6dB-Bandbreite des ersten Ultraschall-Wandlers von der Resonanzfrequenz nämlichen Lamb-Wellen-Schwingungsmodes um mehr als 5% nämlicher Resonanzfrequenz abweicht, und/oder daß eine Mittenfrequenz einer 6dB-Bandbreite des zweiten Ultraschall-Wandlers von der Resonanzfrequenz nämlichen Lamb-Wellen-Schwingungsmodes um mehr als 5% nämlicher Resonanzfrequenz abweicht.

Nach einer achtzehnten Ausgestaltung der Erfindung ist ferner vorgesehen, daß die Rohrwand eine Wandstärke aufweist, die größer als 2 mm, beispielsweise größer als 5 mm, ist.

Nach einer neunzehnten Ausgestaltung der Erfindung ist ferner vorgesehen, daß die Rohrwand eine Wandstärke aufweist, die kleiner als 10 mm ist.

Nach einer zwanzigsten Ausgestaltung der Erfindung ist ferner vorgesehen, daß die Rohrwand aus einem Metall, beispielsweise einem Stahl, besteht.

Nach einer einundzwanzigsten Ausgestaltung der Erfindung ist ferner vorgesehen, daß das Rohr als ein integraler Bestandteil einer Rohrleitung ausgebildet ist.

Nach einer zweiundzwanzigsten Ausgestaltung der Erfindung ist ferner vorgesehen, daß das Rohr in den Verlauf einer Rohrleitung eingesetzt ist, beispielsweise derart, daß das Rohr mittels einer ersten Flanschverbindung mit einem ersten Segment der Rohrleitung und mittels einer zweiten Flanschverbindung mit einem zweiten Segment der Rohrleitung verbunden ist.

Nach einer dreiundzwanzigsten Ausgestaltung der Erfindung ist ferner vorgesehen, daß der erste Ultraschall-Wandler mittels eines, beispielsweise aus Blei-Zirkonat-Titanat und/oder einer anderen Piezo-Keramik hergestellten, piezoelektrischen Wandlerelements sowie mittels eines mit nämlichem Wandlerelement schallleitend gekoppelten, beispielsweise aus Polyetherimid (PEI) hergestellten, Koppelkörpers gebildet ist

Nach einer vierundzwanzigsten Ausgestaltung der Erfindung ist ferner vorgesehen, daß der zweite Ultraschall-Wandler mittels eines, beispielsweise aus Blei-Zirkonat-Titanat und/oder einer anderen Piezo-Keramik hergestellten, piezoelektrischen Wandlerelements sowie mittels eines mit nämlichem Wandlerelement schallleitend gekoppelten, beispielsweise aus Polyetherimid (PEI) hergestellten, Koppelkörpers gebildet ist.

Nach einer fünfundzwanzigsten Ausgestaltung der Erfindung ist ferner vorgesehen, daß die Betriebs- und Meßelektronik einen, insb. nicht-flüchtigen, Datenspeicher zum Speichern digitaler Daten, beispielsweise wenigstens eines Parameterwerts für wenigstens einen das Treibersignal für den ersten Ultraschall-Wandler charakterisierende Einstellparameter, aufweist. Diese Ausgestaltung der Erfindung weiterbildend ist ferner vorgesehen, daß die Betriebs- und Meßelektronik dafür eingerichtet, ist Parameterwerte für wenigstens einen das Treibersignal für den ersten Ultraschall-Wandler charakterisierende Einstellparameter wiederkehrend in nämlichem Datenspeicher abzuspeichern, beispielsweise jeweils zusammen mit einem einen Zeitpunkt eines Einstellens bzw. eines Abspeichern des jeweiligen Parameterwerts repräsentierenden Zeitwerts. Alternativ oder in Ergänzung kann die Betriebs- und Meßelektronik ferner dafür eingerichtet sein, unter Verwendung von im Datenspeicher abgespeicherten Parameterwerten für den wenigstens einen das Treibersignal für den ersten Ultraschall-Wandler charakterisierenden Einstellparameter eine Überprüfung einer Funktionstüchtigkeit des Meßsystems, beispielsweise nämlich eine Überprüfung einer Funktionstüchtigkeit des ersten Ultraschall-Wandlers und/oder des zweiten Ultraschall-Wandler, und/oder eine Überprüfung einer Integrität des Rohrs durchzuführen, und/oder unter Verwendung wenigstens eines im Datenspeicher abgespeicherten Parameterwerts für den wenigstens einen das Treibersignal für den ersten Ultraschall-Wandler charakterisierenden Einstellparameter eine Degradation des Rohrs, beispielsweise eine Veränderung einer Wandstärke der Rohrwand, und/oder eine Veränderung einer Übertragungsfunktion zumindest eines der beiden Ultraschall-Wandler zu detektieren.

Nach einer sechsundzwanzigsten Ausgestaltung der Erfindung ist ferner vorgesehen, daß der erste Ultraschall-Wandler dafür eingerichtet ist, intermittierend als ein elektrische Leistung in Schallleistung wandelnder Sender bzw. als ein Schallleistung in elektrische Leistung wandelnder Empfänger betrieben zu werden.

Nach einer siebenundzwanzigsten Ausgestaltung der Erfindung ist ferner vorgesehen, daß die Betriebs- und Meßelektronik dafür eingerichtet ist, den wenigstens einen Meßwert sowohl mittels des Empfangssignals des zweiten Ultraschall-Wandlers als auch mittels des Treibersignals für den ersten Ultraschall-Wandler zu erzeugen, beispielsweise basierend auf einer anhand des Treibersignals für den ersten Ultraschall-Wandler und des Empfangssignals des zweiten Ultraschall-Wandlers ermittelten Laufzeit für sich durch im Lumen des Rohrs geführtes Fluid entlang einer vorgegebenen Meßstrecke in Richtung vom ersten Ultraschall-Wandler hin zum zweiten Ultraschall-Wandler ausbreitende Ultraschallwellen.

Ein Grundgedanke der Erfindung besteht darin, die Meßgenauigkeit von Meßsystemen der in Rede stehenden Art dadurch zu verbessern, indem selektiv eine signifikante Anregung genau eines innerhalb eines durch eine Bandbreite des im normalen Meßbetrieb für die Ultraschallwandler verwendeten Treibersignals wie auch durch eine Bandbreite der Ultraschallwandler selbst festgelegten Frequenzbereichs liegenden, dominanten Lamb-Wellen-Schwingungsmode des Rohrs realisiert wird, derart, daß ein hoher Anteil an mittels des jeweils als Sender betriebenen Ultraschallwandler generierten Schallleistung in Schwingungen des vorbezeichneten dominanten Lamb-Wellen-Schwingungsmode transformiert wird, gleichwohl eine signifikante Anregung weiterer Lamb-Wellen-Schwingungsmode nämlichen Rohres vermieden wird. Die Erfindung beruht u.a. auf der überraschenden Erkenntnis, daß dies durch den vorbezeichneten, vergleichsweise einfach zu realisierenden, mithin sehr robusten Abgleich des jeweiligen Treibersignals auf das damit bewirkte Empfangssignal auch bei typischerweise nur sehr ungenauer Kenntnis der tatsächlichen Resonanzfrequenz des dominanten Lamb-Wellen-Schwingungsmode mit einer für die angestrebte hohe Meßgenauigkeit ausreichenden Wiederholgenauigkeit reproduziert werden kann, so daß im Ergebnis die Meßgenauigkeit gegenüber den mit herkömmlichen Meßsystemen der in Rede stehenden Art, etwa in Anwendung des eingangs erwähnten, auf eine Maximierung der Signalleistung des Empfangssignals gerichteten Verfahrens, bislang erreichten Meßgenauigkeiten deutlich erhöht werden kann. Ein weiterer Vorteil der Erfindung ist nicht zuletzt auch darin zu sehen, daß diese sehr einfach auch in bereits etablierte (Hardware-) Architekturen von Meßsystemen der in Rede stehenden Art bereits durch entsprechende Modifikationen der jeweiligen Betriebs-und Meßelektroniken, beispielsweise durch Umprogramieren derselben bzw. Laden einer entsprechend angepaßten Firmware in die jeweilige Betriebs-und Meßelektronik, realisiert werden kann.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:

Fig. 1a, b    jeweils ein mittels zweier außen an einem Rohr angeordneten Ultraschall-Wandler gebildetes Meßsystem zum Messen wenigstens eines Parameters eines in einer Rohrleitung strömenden Fluids;

Fig. 2a    einen zeitlichen Verlauf einer elektrischen Spannung eines für ein Meßsystem gemäß Fig. 1a bzw. 1b geeigneten Treibersignals für einen der Ultraschall-Wandler nämlichen Meßsystems, bezogen auf einen Maximalwert nämlicher Spannung;

Fig. 2b    in logarithmierter Darstellung (dekadischer Logarithmus) einen Betrag eines Frequenzspektrums für einen zeitlichen Pegelverlauf einer elektrischen Spannung gemäß Fig. 2a, bezogen auf einen maximalen Betrag nämlichen Frequenzspektrums (normiertes einseitiges Amplitudenspektrum der Spannung), in dB (Dezibel);

Fig. 3a    einen zeitlichen Verlauf einer elektrischen Spannung einer weiteren Variante eines für ein Meßsystem gemäß Fig. 1a bzw. 1b geeigneten Treibersignals für einen der Ultraschall-Wandler nämlichen Meßsystems, bezogen auf einen Maximalwert nämlicher Spannung;

Fig. 3b    in logarithmierter Darstellung (dekadischer Logarithmus) einen Betrag eines Frequenzspektrums für einen zeitlichen Pegelverlauf einer elektrischen Spannung gemäß Fig. 3a, bezogen auf einen maximalen Betrag nämlichen Frequenzspektrums, in dB;

Fig. 4a    einen zeitlichen Verlauf einer elektrischen Spannung eines in einem Meßsystem gemäß Fig. 1a bzw. 1b von einem Ultraschall-Wandler nämlichen Meßsystems gelieferten Empfangssignals, bezogen auf einen Maximalwert nämlicher Spannung;

Fig. 4b    in logarithmierter Darstellung (dekadischer Logarithmus) einen Betrag eines Frequenzspektrums für einen zeitlichen Pegelverlauf einer elektrischen Spannung gemäß Fig. 4a, bezogen auf einen maximalen Betrag nämlichen Frequenzspektrums, in dB;

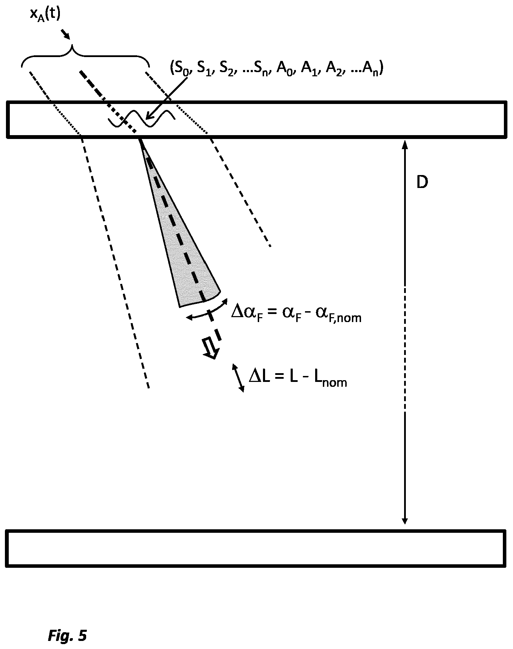

Fig. 5    schematisch einen Verlauf eines in einem Meßsystem gemäß Fig. 1a bzw. 1b ausgebildeten, als Meßstrecke dienlichen Schallausbreitungspfads;

Fig. 6a    eine Abhängigkeit eines einem Meßsystem gemäß Fig. 1a bzw. 1b innewohnenden Meßfehlers von einer Frequenz einer dominierenden Signalkomponente eines einen zeitlichen Spannungspegelverlaufs gemäß Fig. 2a bzw. 3a aufweisenden Treibersignals; und

Fig. 6b    eine Abhängigkeit einer Abweichung einer Frequenz einer dominierenden Signalkomponente eines eine zeitlichen Spannungspegelverlauf gemäß Fig. 2a bzw. 3a aufweisenden Treibersignals von einer Frequenz einer dominierenden Signalkomponente eines mittels nämlichen Treibersignals generierten Empfangssignals von der Frequenz der dominierenden Signalkomponente nämlichen Treibersignals.

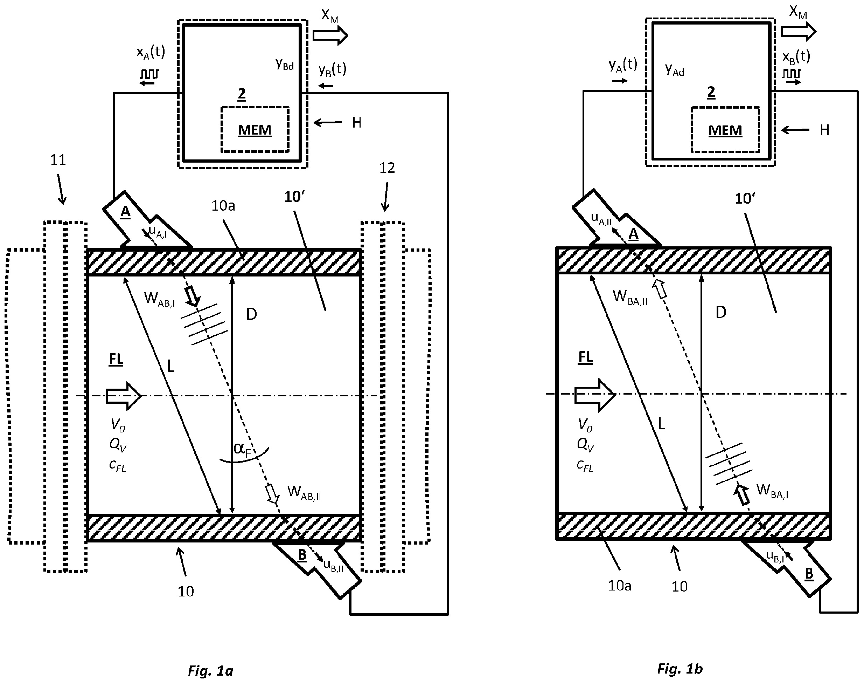

In den Fig. 1a und 1b ist ein Ausführungsbeispiel für ein Meßsystem zum Messen wenigstens eines, insb. fluiddynamischen, Parameters, beispielsweise einer Strömungsgeschwindigkeit $V_0$, einer Volumendurchflußrate $Q_V$ oder eines anderen Strömungsparameters, eines in einer Rohrleitung strömenden Fluids FL, beispielsweise einer Flüssigkeit, eines Gases, oder einer Dispersion, schematisch dargestellt. Die Rohrleitung kann beispielsweise als Anlagenkomponente eines Wasserversorgungsnetzes ausgebildet, mithin kann das Fluid beispielsweise Trinkwasser oder Abwasser sein. Das Fluid FL kann aber beispielsweise auch Erdöl oder ein flüssiger Treibstoff sein bzw. kann die Rohrleitung beispielsweise auch Komponente einer petrochemischen Anlage sein.

Das Meßsystem weist ein Rohr 10 mit einem von einer Rohrwand 10a umgebenen Lumen 10', welches Rohr 10 dafür eingerichtet ist, in seinem Lumen ein Teilvolumen des Fluids FL zu führen bzw. von nämlichem Fluid FL durchströmt zu werden. Das Rohr 10 kann beispielsweise als ein eigenständiges Rohr ausgebildet sein, daß in den Verlauf der vorbezeichneten Rohrleitung eingesetzt ist, beispielsweise indem das Rohr 10, wie in Fig. 1a angedeutet, mittels einer ersten Flanschverbindung 11 mit einem ersten Segment der Rohrleitung und mittels einer zweiten Flanschverbindung 12 mit einem zweiten Segment der Rohrleitung verbunden ist. Das Rohr 10 kann aber beispielsweise auch als ein Teilsegment einer solchen, beispielsweise auch bereits bestehenden, Rohrleitung, mithin als ein integraler Bestandteil nämlicher Rohrleitung ausgebildet sein. Eine Wandstärke der Rohrwand kann beispielsweise im Bereich von wenigen Millimetern bis hin zu einigen Zentimetern liegen. Nach einer Ausgestaltung der Erfindung ist im besonderen vorgesehen, daß die Rohrwand eine Wandstärke aufweist, die größer als 2 mm, insb. auch größer als 5 mm, ist. Nach einer weiteren Ausgestaltung der Erfindung besteht die Rohrwand aus einem Metall, beispielsweise einem Stahl.

Außer dem Rohr weist das Meßsystem desweiteren einen auf einer dem Lumen des Rohrs abgewandten Außenseite der Rohrwand 10a am Rohr 10 angebrachten, via Rohrwand an im Lumen des Rohrs geführtes Fluid akustisch gekoppelten ersten Ultraschall-Wandler A, einen im Abstand zum Ultraschallwandler A auf der Außenseite der Rohrwand am Rohr angebrachten, via Rohrwand an im Lumen des Rohrs geführtes Fluid akustisch gekoppelten zweiten Ultraschall-Wandler B sowie eine Betriebs- und Meßelektronik 2, die sowohl mit dem ersten Ultraschall-Wandler als auch dem zweiten Ultraschall-Wandler elektrisch verbunden ist, auf. Bei dem Meßsystem kann es sich demnach beispielsweise um ein Clamp-On-Ultraschall-Durchflußmeßgerät handeln. Die Betriebs-und Meßelektronik 2 kann beispielsweise mittels eines digitalen Signalprozessors und/oder eines Mikrocontrollers gebildete sein. Zudem kann Betriebs- und Meßelektronik 2 beispielsweise in einem druck- und/oder schlagfesten Schutzgehäuse H untergebracht sein, beispielsweise in einem Schutzgehäuse aus einem Metall, wie etwa einem Edelstahl oder Aluminium, oder einem Kunststoff. Nach einer weiteren Ausgestaltung der Erfindung ist vorgesehen, daß die Betriebs- und Meßelektronik 2 einen, beispielsweise nicht-flüchtigen, Datenspeicher MEM zum Speichern digitaler Daten aufweist. Im Datenspeicher MEM zu speichernde digitale Daten können beispielsweise im Betrieb des Meßsystems generierte Daten, wie etwa Meßdaten und/oder Parameterwerte von Einstellparametern für die Betriebs- und Meßelektronik 2, sein. Nicht zuletzt für eine spätere Diagnose des Meßsystems kann es von Vorteil sein, wenn zumindest die Parameterwerte jeweils auch zusammen mit einem jeweiligen Zeitwert abgespeichert werden, der einen Zeitpunkt eines Einstellens bzw. eines Abspeichern des jeweiligen Parameterwerts repräsentiert.

Jeder der beiden, beispielsweise baugleichen, Ultraschall-Wandler A, B kann, wie bei Meßsystemen der in Rede stehenden Art durchaus üblich, jeweils mittels eines piezoelektrischen Wandlerelements sowie eines mit nämlichem Wandlerelement schallleitend gekoppelten, Koppelkörpers gebildet sein. Nach einer weiteren Ausgestaltung der Erfindung ist ferner vorgesehen, daß wenigstens einer der beiden Ultraschall-Wandler A, B, beispielsweise auch jeder der beiden Ultraschall-Wandler, mittels eines aus Blei-Zirkonat-Titanat und/oder einer anderen Piezo-Keramik hergestellten piezoelektrischen Wandlerelements sowie eines aus Polyetherimid (PEI) hergestellten Koppelkörpers gebildet ist.

Wie in Fig. 1a angedeutet, ist der Ultraschall-Wandler A im besonderen dafür eingerichtet, eine zeitlich ändernde, beispielsweise nämlich gepulste, elektrische Spannung $u_{A,I}$ in sich durch die Rohrwand 10a und weiter durch im Lumen 10' des Rohrs 10 geführtes Fluid ausbreitende Ultraschallwellen $W_{AB,I}$ zu wandeln, mithin als ein elektrische Leistung in Schallleistung wandelnder Sender betrieben zu werden. Zudem ist der, beispielsweise zum Ultraschallwandler A baugleiche, Ultraschall-Wandler B dafür eingerichtet, sich durch im Lumen des Rohrs geführtes Fluid und weiter durch die Rohrwand ausbreitende Ultraschallwellen $W_{AB,II}$ zu empfangen und in eine zeitlich ändernde elektrische Spannung $u_{B,II}$ zu wandeln, mithin als ein Schallleistung in elektrische Leistung wandelnder Empfänger betrieben zu werden.

Der Ultraschallwandler A weist naturgemäß eine sich zwischen einer unteren ersten Grenzfrequenz $f_{u,A}$ des Ultraschallwandlers A und einer oberen zweiten Grenzfrequenz $f_{o,A}$ des Ultraschallwandlers A erstreckende 6dB-Bandbreite $BW_{A,6dB}$ auf; gleichermaßen weist der Ultraschallwandler B eine sich zwischen einer unteren ersten Grenzfrequenz $f_{u,B}$ nämlichen Ultraschallwandlers B und einer oberen zweiten Grenzfrequenz $f_{o,B}$ nämlichen Ultraschallwandlers B erstreckende 6dB-Bandbreite $BW_{B,6dB}$ auf. Eine Mittenfrequenz $f_{0,A}$ der 6dB-Bandbreite $BW_{A,6dB}$ des Ultraschall-Wandlers A, definiert als ein geometrisches Mittel $\sqrt{f_{u,A} \cdot f_{o,A}}$ von dessen erster Grenzfrequenz, $f_{u,A}$, und dessen zweiter Grenzfrequenz, wie auch eine Mittenfrequenz $f_{0,B}$ der 6dB-Bandbreite $BW_{B,6dB}$ des Ultraschall-Wandlers B, definiert als ein geometrisches Mittel $\sqrt{f_{u,B} \cdot f_{o,B}}$ von dessen erster Grenzfrequenz, $f_{u,B}$, und dessen zweiter Grenzfrequenz, können beispielsweise jeweils in einem Bereich 0,5 - 6 MHz liegen. Desweiteren kann die 6dB-Bandbreite jedes der Ultraschall-Wandler beispielsweise so gewählt sein, daß sie - wie bei Meßsystemen der in Rede stehenden Art durchaus üblich - etwa 20-30% der jeweiligen Mittenfrequenz $f_{0,A}$ bzw. $f_{0,B}$ beträgt bzw. einem zwischen etwa 0,2 MHz bis etwa 2,5 MHz liegenden Frequenzbereich entspricht.

Die beiden Ultraschall-Wandler A, B sind, wie auch in Fig. 1a schematisch dargestellt, so voneinander beabstandet auf der Außenseite der Rohrwand 10a positioniert und so ausgerichtet, daß die mittels des Ultraschall-Wandlers A bewirkte Ultraschallwellen $W_{AB,I}$ innerhalb des im Lumen befindlichen Fluids anteilig entlang eines als Meßstrecke AB dienlichen Schallausbreitungspfad propagieren und hernach zumindest teilweise via Rohrwand in den Ultraschall-Wandler B akustisch einkoppeln ( $W_{AB,II}$ ). Im besonderen sind die beiden Ultraschall-Wandler A, B hierbei so auf der Außenseite der Rohrwand positioniert und so ausgerichtet, daß, wie auch in Fig. 1a angedeutet, der als Meßstrecke dienliche Schallausbreitungspfad eine gegenüber einem Innendurchmesser D des Rohrs um einen tatsächlichen Strahlwinkel $\alpha_F$ geneigte Hauptausbreitungsrichtung aufweist, derart, daß eine einer Pfadlänge des Schallausbreitungspfad entsprechende Länge L der Meßstrecke einem Quotienten D / cos $\alpha_F$ nämlichen Innendurchmessers D geteilt durch den Kosinus nämlichen Strahlwinkels $\alpha_F$ entspricht.

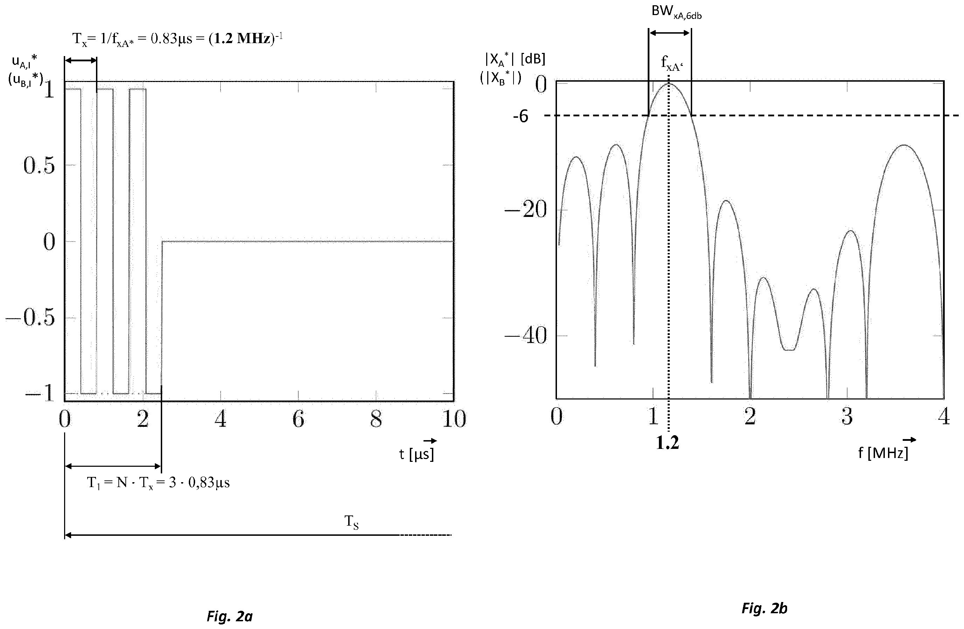

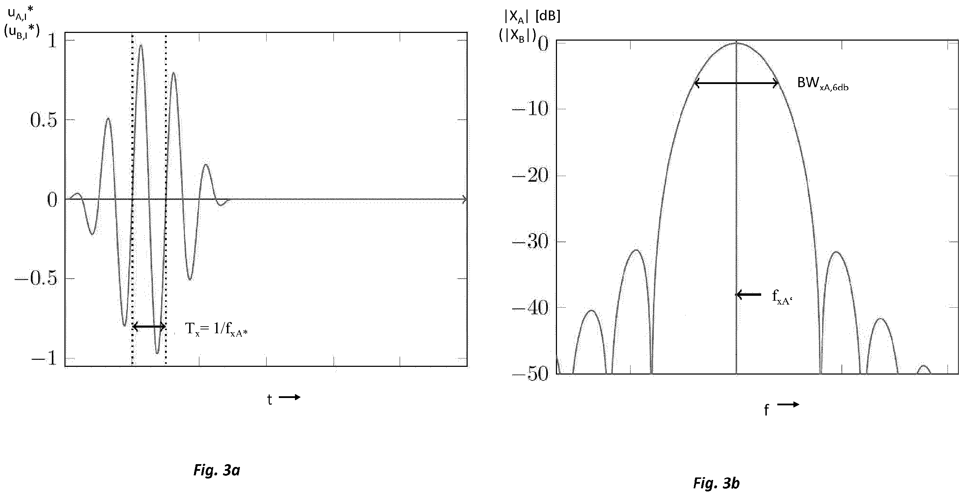

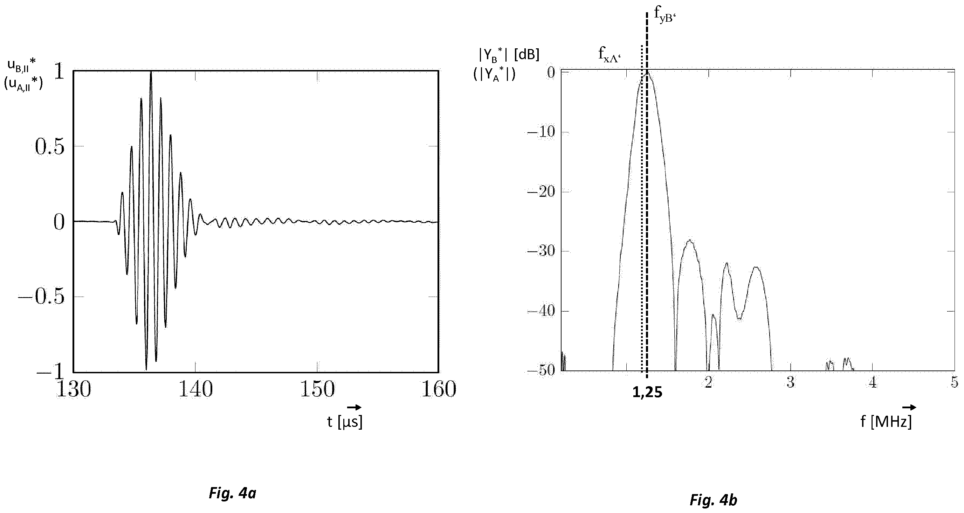

Die Betriebs- und Meßelektronik 2 wiederum ist entsprechend auch dafür eingerichtet, zum Bewirken eines eine zeitlich ändernde elektrischen Spannung $u_{B,II}$ aufweisenden Empfangssignal $y_B(t)$ des Ultraschall-Wandlers B bzw. einer als Empfangssignal $y_B(t)$ dienlichen zeitlich ändernden elektrischen Spannung $u_{B,II}$ am zweiten Ultraschall-Wandler zumindest zeitweise ein eine zeitlich veränderliche, insb. bipolare und/oder gepulste, elektrische Spannung $u_{A,I}$ aufweisendes Treibersignal $x_A(t)$, für den Ultraschall-Wandler A zu generieren bzw. eine als Treibersignal $x_A(t)$ für den Ultraschall-Wandler A dienliche zeitlich veränderliche, beispielsweise nämlich bipolare und/oder gepulste, elektrische Spannung nämlichem Ultraschall-Wandler A anzulegen. Das mittels der Betriebs- und Meßelektronik 2 bereitgestellte Treibersignal $x_A(t)$ ist beim erfindungsgemäßen Meßsystem so ausgebildet, daß sowohl nämliches Treibersignal $x_A(t)$ bzw. dessen elektrische Spannung $u_{A,I}$ - wie auch in Fig. 2a und 3a jeweils anhand einer auf einen Maximalpegel bezogenen normierten Spannung $u_{A,I}^*$ des Treibersignals bzw. in Fig. 2b und 3b jeweils anhand eines normierten, nämlich auf einen maximalen Betrag bezogenen Amplitudenspektrums $|X_A^*|$ der Spannung $u_{A,I}$ dargestellt bzw. aus einer Zusammenschau Fig. 2a, 2b, 3a und 3b ohne weiteres ersichtlich - als auch das damit bewirkte Empfangssignal $y_B(t)$ bzw. dessen elektrische Spannung $u_{B,II}$ - wie auch in Fig. 4a anhand einer auf einen Maximalpegel bezogenen normierten Spannung $u_{A,I}^*$ des Empfangssignals und in Fig. 4b anhand eines auf einen maximalen Betrag bezogenen normierten Amplitudenspektrums $|Y_B^*|$ der Spannung $u_{B,II}$ dargestellt bzw. aus einer Zusammenschau der Fig. 4a und 4b ohne weiteres ersichtlich - jeweils eine Vielzahl spektraler Signalkomponenten $x_{A,i}$ bzw. $y_{B,i}$ enthalten, wobei sowohl das Treibersignal $x_A(t)$ als auch das Empfangssignal $y_B(t)$ jeweils eine dominierende, nämlich eine jeweils maximale spektrale Leistungsdichte $S_{xxA,MAX}$ bzw. $S_{yyB,MAX}$ aufweisende spektrale Signalkomponente $x_A'$ bzw. $y_B'$ enthält. Ein Frequenzspektrum des Treibersignals $x_A(t)$, nicht zuletzt auch eine Frequenz $f_{xA'}$ von dessen dominierender spektraler Signalkomponente $x_A'$, kann entsprechend an die Bandbreiten der Ultraschall-Wandler A, B sowie deren Mittenfrequenzen $f_{0,A}$ bzw. $f_{0,B}$ angepaßt sein, etwa derart, daß die dominierende spektrale Signalkomponente $x_A'$ und damit einhergehend die dominierende spektrale Signalkomponente $y_B'$ innerhalb der 6db-Bandbreiten der Ultraschallwandler A, B liegen bzw. daß eine 6db-Bandbreite $BW_{xA,6dB}$ des Treibersignals $x_A(t)$ bzw. dessen elektrischer Spannung $u_{A,I}$ beispielsweise mehr als 100 kHz, insb. mehr als 1 MHz, beträgt. Darüberhinaus kann das Treibersignal $x_A(t)$ in vorteilhafter Weise ferner so ausgebildet sein, daß nämliches Treibersignal $x_A(t)$ neben einem der vorbezeichneten 6db-Bandbreite $BW_{xA,6dB}$ entsprechenden, mithin die dominierende spektrale Signalkomponente $x_A'$ enthaltenden Hauptfrequenzband allenfalls solche Nebenfrequenzbänder enthält, deren jeweilige spektralen Signalkomponenten sämtlich eine gegenüber der spektralen Leistungsdichte $S_{xxA,MAX}$ der dominierenden spektralen Signalkomponente $x_A'$ um nicht weniger als 6 dB (Dezibel) geringere spektrale Leistungsdichte aufweisen bzw. deren jeweilige spektralen Signalkomponenten, wie auch in Fig. 2b bzw. 3b auszugsweise dargestellt, sämtlich eine gegenüber einem (Spannungs-) Pegel der dominierenden spektralen Signalkomponente $x_A'$ um nicht weniger als 6 dB reduzierten (Spannungs-) Pegel aufweisen.

Nach einer weiteren Ausgestaltung der Erfindung ist die Betriebs- und Meßelektronik 2 im besonderen dafür eingerichtet, die Spannung $u_{A,I}$ des Treibersignals $x_A(t)$ für den Ultraschall-Wandler A zu modulieren, beispielsweise nämlich zu takten; dies im besonderen in der Weise, daß nämliche Spannung $u_{A,I}$ als eine Folge von mit einer, insb. vorgegebenen und/oder zumindest für ein vorgegebenes Zeitintervall ($>> 2 \cdot T_S$) konstant gehaltenen, Schußrate $1/T_S$ nacheinander generierten Pulspaketen ausgebildet ist, von denen jedes jeweils eine vorgegebene Anzahl N, beispielsweise nämlich jeweils zwei oder mehr, rechteckförmige Spannungspulse aufweisen kann. Wie in Fig. 2a beispielhaft gezeigt, kann ein Pulspaket beispielsweise mittels 3 (N=3) gleichgroßen, mithin jeweils ein und dieselbe Periodendauer $T_x$ ($T_x = 0.87\mu s$) aufweisenden, bipolaren Rechteckpulse gebildet sein. Die Pulspakete können ferner so ausgebildet sein, daß zeitlich aufeinanderfolgende Pulspakete jeweils eine gleiche Anzahl N an, insb. uniformen, Rechteckpulsen aufweisen bzw. zumindest für ein vorgegebenes Zeitintervall ($>> 2 \cdot T_S$) uniform sind, mithin auch jeweils eine gleiche Paketlänge $T_1$ ($T_1 = N \cdot T_x$) aufweisen. Alternativ oder in Ergänzung zur vorbezeichneten, nämlich als Folge von in einem der Schußrate entsprechenden Takt $T_S$, zu Pulspaketen formierten rechteckförmigen Spannungspulsen ausgebildete Spannung $u_{A,I}$ kann das Treibersignal $x_A(t)$, wie auch in Fig. 3a gezeigt, zumindest zeitweise aber auch eine Spannung aufweisen, die als eine Folge von mit dem der Schußrate entsprechenden Takt zu, beispielsweise auch uniformen, Pulspaketen formierten sinusförmigen Spannungspulsen (Bursts) ausgebildet ist.

Die Betriebs- und Meßelektronik 2 des erfindungsgemäßen Meßsystems ist desweiteren auch dafür eingerichtet, mittels des Empfangssignals $y_B(t)$ des Ultraschall-Wandlers B wenigstens einen Meßwert $X_M$ bzw. mehrere solcher Meßwerte für den wenigstens einen Parameter zu erzeugen, beispielsweise nämlich für die Strömungsgeschwindigkeit $V_0$ bzw. die Volumendurchflußrate Qv. Der wenigstens eine Meßwert $X_M$ bzw. die Meßwerte können beispielsweise vor Ort visualisiert und/oder - drahtgebunden via angeschlossenen Feldbus und/oder drahtlos per Funk - an ein elektronisches Datenverarbeitungssystem, etwa eine Speicherprogrammierbare Steuerung (SPS) und/oder einen Prozeßleitstand, übermittelt werden, beispielsweise nämlich via Feldbus, etwa gemäß IEC 61158, IEC 61784-1 bzw. IEC 61784-2, und/oder via Funkverbindung, etwa gemäß IEEE 802.11 oder IEEE 802.15.4. Nach einer weiteren Ausgestaltung der Erfindung ist die Betriebs-und Meßelektronik 2 dafür eingerichtet, den wenigstens einen Meßwert $X_M$ sowohl mittels des Empfangssignals $y_B(t)$ des Ultraschall-Wandlers B als auch mittels des Treibersignals $x_A(t)$ für den Ultraschall-Wandler A zu erzeugen, beispielsweise nämlich basierend auf einer anhand des Treibersignals $x_A(t)$ und des Empfangssignals $y_B(t)$ ermittelten Laufzeit $t_{AB}$ für sich durch im Lumen des Rohrs geführtes Fluid entlang der vorgegebenen Meßstrecke AB in Richtung vom Ultraschall-Wandler A hin zum Ultraschall-Wandler B ausbreitende Ultraschallwellen $W_{AB,II}$.

Nach einer anderen Ausgestaltung der Erfindung ist der Ultraschall-Wandler A ferner dafür eingerichtet, nicht nur als ein elektrische Leistung in Schallleistung wandelnder Sender, sondern, wie auch in Fig. 1b dargestellt bzw. aus einer Zusammenschau der Fig. 1a und 1b ohne weiteres ersichtlich, intermittierend als ein elektrische Leistung in Schallleistung wandelnder Sender bzw. als ein Schallleistung in elektrische Leistung wandelnder Empfänger betrieben zu werden. Darüberhinaus kann auch der Ultraschall-Wandler B dafür eingerichtet sein, intermittierend, beispielsweise nämlich auch komplementär zum Ultraschall-Wandler A, als ein in Schallleistung in elektrische Leistung wandelnder Empfänger bzw. als ein elektrische Leistung in Schallleistung wandelnder Sender betrieben zu werden. Dementsprechend ist nach einer weiteren Ausgestaltung auch der Ultraschall-Wandler B dafür eingerichtet, eine zeitlich ändernde elektrische Spannung in sich durch die Rohrwand und weiter durch im Lumen des Rohrs geführtes Fluid ausbreitende Ultraschallwellen zu wandeln, und ist der Ultraschall-Wandler A dafür eingerichtet, sich durch im Lumen des Rohrs geführtes Fluid und weiter durch die Rohrwand ausbreitende Ultraschallwellen zu empfangen und in eine zeitlich ändernde elektrische Spannung zu wandeln. Desweiteren ist die Betriebs- und Meßelektronik 2 nach einer weiteren Ausgestaltung der Erfindung auch dafür eingerichtet, zum Bewirken einer als ein Empfangssignal $y_A(t)$ des Ultraschall-Wandlers A dienlichen zeitlich ändernden, beispielsweise ebenfalls eine Bandbreite von mehr als 100 kHz aufweisenden, elektrischen Spannung am Ultraschall-Wandler A zumindest zeitweise, insb. alternierend zum Treibersignal $x_A(t)$ für nämlichen Ultraschall-Wandler A, auch ein eine zeitlich veränderliche, insb. bipolare, elektrische Spannung aufweisendes Treibersignal $x_B(t)$ für den Ultraschall-Wandler B zu generieren. Nämliches Treibersignal $x_B(t)$ kann beispielsweise so ausgebildet sein, daß es zum Treibersignal $x_A(t)$ für den Ultraschall-Wandler A zumindest für ein vorgegebenes Zeitintervall komplementär ist. Die Betriebs- und Meßelektronik 2 kann hierbei zudem dafür eingerichtet sein, den wenigstens einen Meßwert sowohl mittels des Empfangssignals $y_B(t)$ des Ultraschall-Wandlers B als auch mittels des Empfangssignals $y_A(t)$ des Ultraschall-Wandlers A zu erzeugen, beispielsweise basierend auf einer anhand nämlicher Empfangssignale $y_B(t)$, $y_A(t)$ ermittelten Laufzeitdifferenz zwischen sich durch im Lumen des Rohrs geführtes Fluid entlang einer vorgegebenen Meßstrecke, gleichwohl in entgegengesetzten Richtungen ausbreitende Ultraschallwellen und/oder basierend auf einer Kreuzkorrelation nämlicher

Empfangssignale $y_B(t)$, $y_A(t)$. In Ergänzung dazu kann die Betriebs- und Meßelektronik 2 ferner auch dafür eingerichtet sein, den wenigstens einen Meßwert sowohl mittels des Treibersignals $x_A(t)$ für den Ultraschall-Wandler A sowie des Empfangssignals $y_B(t)$ des Ultraschall-Wandlers B als auch mittels des Treibersignals $x_A(t)$ für den Ultraschall-Wandler B sowie des Empfangssignals $y_B(t)$ des Ultraschall-Wandlers A zu erzeugen, beispielsweise basierend auf sowohl einer anhand des Treibersignals $x_A(t)$ und des Empfangssignals $y_B(t)$ ermittelten Laufzeit $t_{AB}$ für sich durch im Lumen des Rohrs geführtes Fluid entlang der Meßstrecke AB in Richtung vom Ultraschall-Wandler A hin zum Ultraschall-Wandler B ausbreitende Ultraschallwellen $W_{AB,II}$ als auch basierend auf einer anhand des Treibersignals $x_B(t)$ und des Empfangssignals $y_A(t)$ ermittelten Laufzeit $t_{BA}$ für sich durch im Lumen des Rohrs geführtes Fluid entlang einer der Meßstrecke AB entgegen gerichteten Meßstrecke in Richtung vom Ultraschall-Wandler B hin zum Ultraschall-Wandler A ausbreitende Ultraschallwellen $W_{BA,II}$. Anhand der ermittelten Laufzeiten $t_{AB}$, $t_{BA}$ bzw. der entsprechenden Laufzeitdifferenz $(t_{BA} - t_{AB})$ kann mittels der Betriebs- und Meßelektronik der fluiddynamische Parameter mittlere Strömungsgeschwindigkeit $V_0$, beispielsweise nämlich basierend auf der Berechnungsvorschrift:

$$V_0 = \frac{L}{2 \cdot \sin \alpha_F} \cdot \frac{t_{ba} - t_{ab}}{t_{ab} \cdot t_{ba}} = \frac{1}{2 \cdot \sin \alpha_F} \cdot \frac{D}{\cos \alpha_F} \cdot \frac{t_{ba} - t_{ab}}{t_{ab} \cdot t_{ba}},$$

und/oder kann mittels der Betriebs- und Meßelektronik der fluiddynamische Parameter Volumendurchflußrate $Q_V$ beispielsweise nämlich basierend auf der Berechnungsvorschrift:

$$Qv = \frac{\pi}{4} \cdot K \cdot D^2 \cdot V_0 = \frac{\pi}{4} \cdot K \cdot D^2 \cdot \frac{L}{2 \cdot \sin \alpha_F} \cdot \frac{t_{ba} - t_{ab}}{t_{ab} \cdot t_{ba}},$$

berechnet werden. Der Strahlwinkel $\alpha_F$ und entsprechend auch die Pfadlänge L sind u.a. von der Ausrichtung der Ultraschall-Wandler A, B relativ zum Rohr 10 sowie von sich aus den im Meßsystem etablierten, für die Schallausbreitung relevanten Schallgeschwindigkeiten bzw. akustischen Impedanzen des Meßsystems abhängig. In Kenntnis des tatsächlichen konstruktiven Aufbaus des Meßsystems, nicht zuletzt auch der Wandstärke der Rohrwand und des Innendurchmessers D des Rohrs, und der Schallgeschwindigkeiten ($c_i$) bzw. Wellenzahlen ($k_i$) der verwendeten Materialien, einschließlich des im Lumen des Rohrs geführten Fluids FL, kann nämlicher Strahlwinkel $\alpha_F$ als ein nomineller Strahlwinkel $\alpha_{F,nom}$ ($\alpha_{F,nom} \rightarrow \alpha_F$) vorab berechnet werden, beispielsweise anhand des Snellius'schen Brechungsgesetzes für Akustik. Ferner kann in Kenntnis des Strahlwinkel $\alpha_{F,nom}$ sowie des Innendurchmessers D auch die Pfadlänge L entsprechend vorab als nominelle Pfadlänge ($L_{nom} = D / \cos\alpha_{F,nom} \rightarrow L$) berechnet werden. Die Ermittlung der vorbezeichneten Nominalwerte kann beispielsweise im Zuge einer Inbetriebnahme des Meßsystems durch Einmessen des fertig montierten Meßsystems mittels der Betriebs- und Meßelektronik erfolgen. Alternativ oder in Ergänzung zu den vorbezeichneten fluiddynamischen Parameter kann mittels der Betriebs- und Meßelektronik 2 beispielsweise auch die das Fluid stofflich charakterisierende Schallgeschwindigkeit, beispielsweise nämlich basierend auf einer Berechnungsvorschrift:

$$c_{FL} = \frac{L}{2} \cdot \left( \frac{1}{t_{ab}} + \frac{1}{t_{ba}} \right)$$

ermitteltet werden.

Nicht zuletzt auch zwecks Ermittlung des wenigstens einen Meßwerts $X_M$ ist die Betriebs- und Meßelektronik 2 nach einer weiteren Ausgestaltung der Erfindung ferner eingerichtet, das Empfangssignal $y_B(t)$ des Ultraschall-Wandlers B in ein nämliches Empfangssignal $y_B(t)$ repräsentierendes digitales Empfangssignal $y_{Bd}$ zu wandeln sowie den wenigstens einen Meßwert für den wenigstens einen Parameter mittels nämlichen, das Empfangssignal $y_B(t)$ repräsentierenden digitalen Empfangssignals $y_{Bd}$ zu erzeugen. Für den vorbezeichneten Fall, daß die beiden Ultraschallwandler A, B jeweils intermittierend als ein elektrische Leistung in Schalleistung wandelnder Sender bzw. als ein Schalleistung in elektrische Leistung wandelnder Empfänger betrieben werden können, kann die Betriebs- und Meßelektronik ferner auch dafür eingerichtet sein, das Empfangssignal $y_A(t)$ des Ultraschall-Wandlers A in ein nämliches Empfangssignal $y_A(t)$ repräsentierendes digitales Empfangssignal $y_{Ad}$ zu wandeln sowie den wenigstens einen Meßwert für den wenigstens einen Parameter entsprechend mittels nämlichen digitalen Empfangssignals $y_{Ad}$ zu erzeugen, beispielsweise nämlich den wenigstens einen Meßwert für den wenigstens einen Parameter mittels des digitalen Empfangssignals $y_{Ad}$ sowie mittels des digitalen Empfangssignals $y_{Bd}$ zu erzeugen.

Wie bereits eingangs erwähnt, wohnen dem Rohr naturgemäß eine Vielzahl von sogenannten Lamb-Wellen-Schwingungsmoden, nämlich eine Vielzahl asymmetrischer Lamb-Wellen-Schwingungsmoden $A_0$, $A_1$, $A_2$ ...$A_n$ bzw. eine Vielzahl symmetrischer Lamb-Wellen-Schwingungsmoden $S_0$, $S_1$, $S_2$ ...$S_n$, inne, in denen die Rohrwand Lamb-Wellen ausbildende Schwingungen ausführt bzw. ausführen kann, derart, daß mehrere nämlicher Lamb-Wellen-Schwingungsmoden jeweils Resonanzfrequenzen aufweisen, die innerhalb der Bandbreite der beiden Ultraschallwandler A, B bzw. des Treibersignals $x_A(t)$ oder des Treibersignals $x_B(t)$, mithin innerhalb der Bandbreite jeweils angeregten bzw. wieder empfangenen Ultraschallwellen $W_{AB,I}$, $W_{AB,II}$, $W_{BA,I}$, $W_{BA,II}$ liegen, wobei die tatsächlichen Resonanzfrequenzen der Lamb-Wellen-Schwingungsmoden bzw. eine jeweilige Lage der Resonanzfrequenzen im Frequenzbereich nur näherungsweise bekannt sind bzw. anhand der vorab bekannten Kennwerte des Meßsystems, beispielsweise nämlich für das Material und die Wandstärke der Rohrwand 10a, nur ungefähr abgeschätzt werden können. Im Ergebnis ist ein Einfluß mittels des Ultraschallwandlers A allfällig, gleichwohl in nicht bekannter Anzahl bzw. in nicht bekannter Intensität angeregter Lamb-Wellen-Schwingungsmoden des Rohrs auf den Strahlwinkel $\alpha_F$ - derart, daß zwischen nämlichem (momentanen) Strahlwinkel $\alpha_F$ und dem vorab berechneten nominellen Strahlwinkel $\alpha_{F,nom}$ eine im Betrieb nicht quantifizierbare Winkelabweichung $\Delta\alpha_F$ ($\alpha_F = \alpha_{F,nom} + \Delta\alpha_F$) bzw. ein im Betrieb nicht quantifizierbarer Winkelfehler existiert - im Betrieb nicht ohne weiteres meßbar bzw. kann nämlicher Einfluß der tatsächlich angeregten Lamb-Wellen-Schwingungsmoden bei der Berechnung des wenigstens einen Meßwerts nicht entsprechend berücksichtigt werden. Gleichermaßen nicht bzw. nur ungenau meßbar ist ein damit einhergehender Pfadlängenfehler, nämlich eine Abweichung $\Delta L$ ($L = L_{nom} + \Delta L$) der Pfadlänge L von der nominellen Pfadlänge $L_{nom}$. Untersuchungen haben hierbei ergeben, daß der vorbezeichnete Winkelfehler $\Delta\alpha_F$ bzw. damit einhergehend auch der Pfadlängenfehler $\Delta L$ dadurch erheblich minimiert oder sogar vermieden werden kann, indem die Frequenz $f_{xA'}$ der dominierenden Signalkomponente $x_A'$ des Treibersignals $x_A(t)$ so gewählt ist, daß sie zumindest näherungsweise einer der Resonanzfrequenzen der Lamb-Wellen-Schwingungsmoden entspricht.

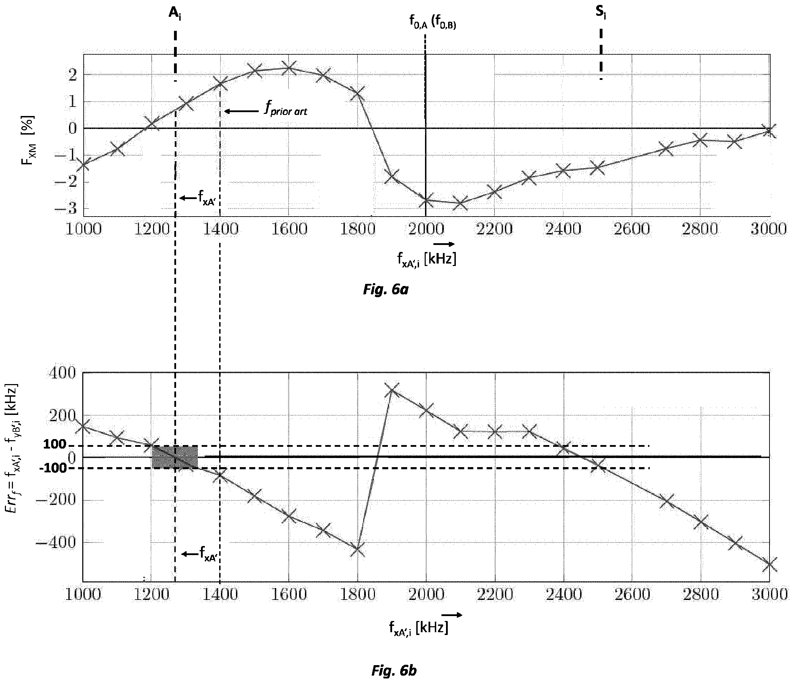

Weiterführende Untersuchungen an Meßsystemen der in Rede stehenden Art haben überraschenderweise zudem gezeigt, daß - wie auch aus Fig. 6a ersichtlich - bereits auch für den Fall, daß die Frequenz $f_{xA'}$ nämlicher Signalkomponente $x_A'$ um weniger als 100 kHz, ggf. auch um weniger als 50 kHz, von einer Resonanzfrequenz eines der Lamb-Wellen-Schwingungsmoden bzw. um weniger als 10 %, ggf. auch um weniger als 5 %, einer Resonanzfrequenz eines der Lamb-Wellen-Schwingungsmoden von nämlicher Resonanzfrequenz abweicht, für Meßsysteme der in Rede stehenden Art, nicht zuletzt auch als Clamp-on-Ultraschalldurchlußmeßgeräte ausgebildet Meßsysteme, eine Meßgenauigkeit erreicht werden kann, die gegenüber den mit konventionellen Meßsystemen bis anhin erreichbaren Meßgenauigkeiten nennenswert verbessert ist, bzw. umgekehrt ein relativer Meßfehler $F_{XM}$ (<2%) realisiert werden kann, der gegenüber relativen Meßfehlern konventioneller Meßsysteme ($\geq$2%) deutlich verringert, beispielsweise nämlich nahezu halbiert ist. Dies kann u.a. darauf zurückgeführt werden, daß somit immerhin erreicht bzw. sichergestellt werden kann, daß zumindest im normalen Meßbetrieb des Meßsystem genau einer der innerhalb der 6dB-Bandbreiten $BW_{A,6dB}$, $BW_{B,6dB}$ der Ultraschallwandler A bzw. B wie auch durch die 6db-Bandbreite $BW_{xA,6dB}$ Treibersignals $x_A(t)$, mithin innerhalb eines durch die vorbezeichneten 6dB-Bandbreiten mitbestimmten Übertragungs- bzw. Arbeitsbereichs des Meßsystems liegenden Lamb-Wellen-Schwingungsmoden dominierend, nämlich mit einer Intensität angeregt ist, die gegenüber einer maximalen Intensität, mit der irgend ein anderer mit seiner Resonanzfrequenz innerhalb der 6dB-Bandbreiten $BW_{A,6dB}$, $BW_{B,6dB}$ der Ultraschallwandler A bzw. B liegender Lamb-Wellen-Schwingungsmode allfällig angeregt ist, um nicht weniger als 10 dB erhöht ist, bzw. daß die von der Rohrwand in nämlichem dominierend angeregten Lamb-Wellen-Schwingungsmode (dominanter Lamb-Wellen-Schwingungsmode) ausgeführten Schwingungen dementsprechend eine im Vergleich zu allfälligen Schwingungen der Rohrwand in den übrigen Lamb-Wellen-Schwingungsmoden der Rohrwand nennenswert erhöhte, nämlich um mehr als >10 dB höhere Schwingungsamplitude aufweisen (Fig. 4b). Umgekehrt kann somit auf sehr einfache Weise erreicht werden, daß zumindest im normalen Meßbetrieb des Meßsystems außer nämlichem einen dominanten Lamb-Wellen-Schwingungsmode kein weiterer mit seiner Resonanzfrequenz innerhalb des vorbezeichneten Übertragungs- bzw. Arbeitsbereichs des Meßsystems liegender Lamb-Wellen-Schwingungsmode des Rohrs nennenswert, nämlich mit einer gegenüber der Intensität des dominanten Lamb-Wellen-Schwingungsmodes um weniger als mindestens 10 dB reduzierten Intensität angeregt ist (Fig. 4b); dies - nicht zuletzt auch bei Verwendung konventioneller Ultraschall-Wandler bzw. von Ultraschall-Wandlern herkömmlicher Bauart - sogar für den typischen Fall, daß die exakten Resonanzfrequenzen der Lamb-Wellen-Schwingungsmoden bzw. das exakte Frequenzspektrum des Rohrs nicht bekannt ist, bzw. auch für die hinsichtlich der Meßgenauigkeit bislang besonders kritischen Fälle, daß - wie auch aus Fig. 6a ersichtlich - zumindest eine der beiden Mittenfrequenzen $f_{0,A}$ bzw. $f_{0,B}$ von jeder der vorbezeichneten Resonanzfrequenzen um mehr als 5% der jeweiligen Resonanzfrequenz ($A_i$) abweicht; dies ist bei Verwendung konventioneller Ultraschallwandler regelmäßig auch bei Rohren mit einer Rohrwandstärke von kleiner als 10 mm gegeben.

Um zu erreichen bzw. sicherzustellen, daß zumindest in einem normalen Meßbetrieb des Meßsytems bzw. zumindest während eines für die Ermittlung des Meßwerts erforderlichen Meßintervalls durch den Ultraschallwandler A - wie auch in Fig. 6a gezeigt bzw. aus einer Zusammenschau der Fig. 6a und 6b ersichtlich - möglichst nur genau ein Lamb-Wellen-Schwingungsmode ($A_i$) des Rohrs, gleichwohl kein weiterer der, ggf. auch innerhalb des Übertragungs- bzw. Arbeitsbereichs des Meßsystems liegenden,

Lamb-Wellen-Schwingungsmoden ($S_i$) des Rohrs 10 nennenswert auf seiner Resonanzfrequenz angeregt wird, ist die Betriebs- und Meßelektronik 2 des erfindungsgemäßen Meßsystems daher ferner dafür eingerichtet, das Treibersignal $x_A(t)$ für nämlichen Ultraschall-Wandler A so zu generieren, daß - wie auch in Fig. 6b dargestellt - eine Frequenz $f_{xA'}$ der dominierenden Signalkomponente $x_A'$ des Treibersignals $x_A(t)$ um einen Betrag von nicht mehr als |$\pm$100 kHz|, insb. um einen Betrag von weniger als |$\pm$50 kHz|, von einer Frequenz $f_{yB'}$ der dominierenden Signalkomponente $y_B'$ des Empfangssignals $y_B(t)$ des Ultraschall-Wandlers B und/oder um nicht mehr als 10 %, insb. um weniger als 5 %, der Frequenz $f_{yB'}$ der dominierenden Signalkomponente $y_B'$ des Empfangssignals $y_B(t)$ von nämlicher Frequenz $f_{yB'}$ abweicht. Dies kann z.B. dadurch erreicht werden, indem die Betriebs- und Meßelektronik 2 das Treibersignal $x_A(t)$ zunächst so konfektioniert, daß dessen dominierende Signalkomponente $x_A'$ eine initiale, nämlich auf einen vorgegebenen Startfrequenzwert justierte Frequenz $f_{xA'}$ aufweist, derart, daß eine Abweichung nämlicher (initialen) Frequenz $f_{xA'}$ von der Frequenz $f_{yB'}$ der dominierenden Signalkomponente $y_B'$ des so generierten Empfangssignals $y_B(t)$ zunächst größer als eine momentan erreichbare minimale bzw. schlußendlich erreichte Abweichung $Err_f$ ist, beispielsweise auch derart, daß nämliche Abweichung zwischen initialer Frequenz $f_{xA'}$ und zugehöriger Frequenz $f_{yB'}$ zunächst mehr als |$\pm$100 kHz| beträgt. Dementsprechend ist die Betriebs- und Meßelektronik auch dafür eingerichtet, die Frequenz $f_{xA'}$ der dominierenden Signalkomponente $x_A'$ des Treibersignals $x_A(t)$, beispielsweise auch schrittweise ($f_{xA',i}$), zu ändern, nicht zuletzt auch deshalb, um die vorbezeichnete Abweichung der Frequenz $f_{xA'}$ von der Frequenz $f_{yB'}$ sukzessive zu verringern und/oder um eine zunächst zu große Abweichung der Frequenz $f_{xA'}$ von der Frequenz $f_{yB'}$ zu minimieren, nämlich möglichst genau auf eine momentan erreichbare minimale Abweichung $Err_f$ einzustellen bzw. die Frequenz $f_{xA'}$ auf einen entsprechenden (optimalen) Arbeitsfrequenzwert einzustellen, beispielsweise nämlich - wie auch in Fig. 6b gezeigt bzw. aus einer Zusammenschau der Fig. 3b, 4b und 6b ersichtlich - 1,25 MHz für das den in den Fig. 3b und 4b gezeigten (normierten) Frequenzspektren zugrundeliegende Meßsystem. Als Startfrequenzwert kann beispielsweise ein von wenigstens einem Kennwert wenigstens eines der beiden Ultraschall-Wandler A, B - beispielsweise nämlich wenigstens einer der vorbezeichneten Grenz- bzw. Mittenfrequenzen $f_{u,A}$, $f_{u,B}$, $f_{o,A}$, $f_{o,B}$, $f_{0,A}$, $f_{0,B}$ - abgeleiteter Frequenzwert oder aber auch ein anhand nomineller Kenndaten des Rohrs vorab ermittelter, beispielsweis auch in der Betriebs-und Meßelektronik 2 hinterlegter, Schätzwert für eine innerhalb des vorbezeichneten Übertragungs- bzw. Arbeitsbereichs des Meßsystems liegende Resonanzfrequenz eines der Lamb-Wellen-Schwingungsmodes des Rohres dienen. Startfrequenzwert kann aber beispielsweise auch ein zunächst nach einem herkömmlichen, beispielsweise auf eine Maximierung einer Signalleistung des Empfangssignals gerichteten Verfahren, für das Treibersignal $x_A(t)$ zunächst ermittelte Frequenz $f_{xA'}$ ($f_{prior\ art} \rightarrow f_{xA'}$) sein. Für den bereits erwähnten Fall, daß die Spannung $u_{A,l}$ des Treibersignals $x_A(t)$ als eine Folge von in einem mit der Schußrate $1/T_S$ korrespondierenden zeitlichen Abstand aufeinanderfolgenden, jeweils zwei oder mehr Spannungspulse aufweisenden Pulspaketen ausgebildet ist (Fig. 2a, Fig. 3a), entspricht die Frequenz $f_{xA'}$ der dominierenden Signalkomponente $x_A'$ des Treibersignals $x_A(t)$, wie auch aus einer Zusammenschau der Fig. 2a und 2b bzw. der Fig. 3a und 3b ohne weiteres ersichtlich, beispielsweise einer einem Kehrwert einer (Pulspaket internen) Periodendauer $T_x$ eines einzelnen Spannungspulses entsprechenden Impulsfolgefrequenz der innerhalb eines jeweiligen Pulspakets formierten Spannungspulse. Dementsprechend kann die Frequenz $f_{xA'}$ der dominierenden Signalkomponente $x_A'$ des Treibersignals $x_A(t)$ mittels der Betriebs- und Meßelektronik 2 beispielsweise dadurch passend eingestellt werden, indem nämliche Periodendauer $T_x$ auf einen für die Frequenz $f_{xA'}$ angestrebten Wert eingestellt wird, einhergehend mit einer entsprechenden Änderung der Paketlänge $T_1$ ($T_1 = N \cdot T_x$) und/oder mit einer entsprechenden Änderung der Anzahl N ($N = T_x / T_1$) an in einem Pulspaket jeweils enthaltenen Rechteckpulsen. Darüberhinaus kann die Frequenz der dominierenden Signalkomponente $x_A'$ des Treibersignals $x_A(t)$ für den Ultraschall-Wandler A beispielsweise auch dadurch zeitlich geändert werden, indem mittels der Betriebs- und Meßelektronik zeitlich aufeinanderfolgend generierte Spannungspulse unterschiedliche Pulsbreiten aufweisen bzw. indem zu einem ersten Pulspaket formierte rechteckförmige Spannungspulse mit einer Pulsbreite generiert werden, die von einer Pulsbreite abweicht, mit der nämlichem ersten Pulspaket zeitlich nachfolgend generierte, beispielsweise nämlich zu einem zweiten Pulspaket, formierte rechteckförmige Spannungspulse erzeugt werden.

Für den vorbezeichneten Fall, daß in der Betriebs- und Meßelektronik 2 ein dem Speichern im Betrieb des Meßsystem generierten digitaler Daten dienenden, mithin beschreibbaren Datenspeicher MEM vorgesehen ist, kann der vorbezeichnete Startwert als ein Parameterwert $W_{f0}$ für einen das Treibersignal $x_A(t)$, hier nämlich die für die dominierende Signalkomponente $x_A'$ bei einer Inbetriebnahme bzw. nach einem erstmaligen oder auch erneuten Aufstarten des Meßsystems zunächst einzustellende initiale Frequenz, charakterisierender Einstellparameter abgespeichert sein. Alternativ oder in Ergänzung zum Abspeichern des Startwerts im Datenspeicher MEM kann nach dem Auffinden des für den Betrieb des Meßsystems geeigneten Arbeitsfrequenzwerts für die Frequenz $f_{xA'}$ im Datenspeicher MEM nämlicher Arbeitsfrequenzwert als Parameterwert $W_{fx}$ für einen das Treibersignal $x_A(t)$ - hier nämlich die mit einer minimale Abweichung der Frequenz $f_{xA'}$ von der Frequenz $f_{yB'}$ korrespondierende, im normalen Meßbetrieb für die dominierende Signalkomponente $x_A'$ möglichst genau einzustellende optimale Frequenz - charakterisierender (weiterer) Einstellparameter abgespeichert werden, ggf. auch zusammen mit einem entsprechenden Zeitwert (Zeitstempel), beispielsweise in Form eines Datums und/oder einer Uhrzeit. Unter Verwendung der im Datenspeicher MEM abgespeicherten Parameterwerte für den bzw. die das Treibersignal $x_A(t)$ charakterisierenden Einstellparameter, nicht zuletzt des Parameterwerts $W_{fx}$, kann zudem eine Funktionstüchtigkeit des Meßsystems im Betrieb wiederkehrend durchgeführt werden, beispielsweise indem gelegentlich erneut die vorbezeichnete optimale Frequenz $f_{xA'}$ für die dominierende Signalkomponente $x_A'$ des Treibersignals ermittelt und eine aktuell ermittelte optimale Frequenz $f_{xA'}$ mit einer zu einem früheren Zeitpunkt ermittelten - hier nämlich durch den abgespeicherten Parameterwert $W_{fx}$ repräsentierten - (älteren) optimale Frequenz verglichen wird, und indem anhand einer allfälligen Abweichung zwischen beiden vorbezeichneten optimalen Frequenzen eine verminderte Funktionstüchtigkeit bzw. eine Störung des Meßsystems - beispielsweise infolge einer Degradation des Rohrs, wie etwa einer Veränderung einer Wandstärke der Rohrwand, und/oder infolge einer Veränderung einer Übertragungsfunktion zumindest eines der beiden Ultraschall-Wandler A, B - detektiert wird. Dementsprechend ist die Betriebs- und Meßelektronik 2 nach einer weiteren Ausgestaltung der Erfindung auch dafür eingerichtet, unter Verwendung von im Datenspeicher MEM abgespeicherten Parameterwerten für den wenigstens einen das Treibersignal für den Ultraschall-Wandler A charakterisierenden Einstellparameter eine Überprüfung einer Funktionstüchtigkeit des Meßsystems, beispielsweise eine Überprüfung einer Funktionstüchtigkeit des Ultraschall-Wandlers A und/oder des Ultraschall-Wandlers B und/oder eine Überprüfung einer Integrität des Rohrs, durchzuführen.

Die zur Ermittlung der- beim erfindungsgemäßen Meßsystem im normalen Meßbetrieb weniger als $|\pm 100\ kHz|$ betragenden - Abweichung der Frequenz $f_{xA'}$ von der Frequenz $f_{yB'}$ zusätzlich zur Frequenz $f_{xA'}$ noch benötigte, gleichwohl im Gegensatz zur Frequenz $f_{xA'}$ zunächst noch nicht bekannte (momentane) Frequenz $f_{yB'}$ der dominierenden Signalkomponente $y_B'$ des Empfangssignals $y_B(t)$ kann anhand nämlichen Empfangssignals $y_B(t)$ während des Betriebs des Meßsystems mittels der Betriebs- und Meßelektronik 2 wiederkehrend ermittelt werden, beispielsweise anhand eines im Betrieb ermittelten Amplitudenspektrums $|Y_B|$ (Betrag eines Frequenzspektrums) des Empfangssignals $y_B(t)$ bzw. anhand eines für nämliches Amplitudenspektrum $|Y_B|$ ermittelten Maximalwerts und dessen zugehöriger Frequenz. Der bei dem in Fig. 4b gezeigten normierten Amplitudenspektrum $|Y_B^*|$ 0dB (Dezibel) betragende Maximalwert entspricht der spektralen Signalkomponente des Empfangssignals $y_B(t)$ mit der größten Amplitude bzw. der größten spektrale Leistungsdichte ($S_{yyB,MAX}$) und somit der gesuchten dominierenden spektralen Signalkomponente $y_B'$ des Empfangssignals $y_B(t)$. Dementsprechend ist die Betriebs-und Meßelektronik nach einer weiteren Ausgestaltung der Erfindung, nicht zuletzt auch zum Ermitteln der Frequenz $f_{yB'}$ der dominierenden Signalkomponente $y_B'$ des Empfangssignals $y_B(t)$ des Ultraschall-Wandlers B, ferner dafür eingerichtet, ein Amplitudenspektrum $|Y_B|$ des Empfangssignals $y_B(t)$ des Ultraschall-Wandlers B bzw. ein normiertes Amplitudenspektrum $|Y_B^*|$ des Empfangssignals $y_B(t)$ zu ermitteln, beispielsweise um basierend darauf die Leistung und/oder die Amplitude und/oder die Frequenz $f_{yB'}$ der dominierenden Signalkomponente $y_B'$ des Empfangssignals $y_B(t)$ des Ultraschall-Wandlers B zu ermitteln. Alternativ oder in Ergänzung kann die Betriebs- und Meßelektronik auch dafür eingerichtet sein, ein, ggf. auch normiertes Leistungsdichtespektrum (PSD) des Empfangssignals $y_B(t)$ zu ermitteln bzw. zu berechnen, um hernach die dominierende spektralen Signalkomponente $y_B'$ des Empfangssignals $y_B(t)$ bzw. deren Frequenz $f_{yB'}$ unter Verwendung nämlichen Leistungsdichtespektrums zu ermitteln. Für den vorbezeichneten Fall, daß die Betriebs- und Meßelektronik 2 dafür eingerichtet ist, das Empfangssignal $y_B(t)$ in ein entsprechendes digitales Empfangssignal $y_{Bd}$ zu wandeln, kann die Betriebs- und Meßelektronik ferner auch dafür eingerichtet sein, zum Ermitteln des Amplitudenspektrums $|Y_B|$ des Empfangssignals $y_B(t)$ zunächst eine diskrete Fourier-Transformation (DFT $\rightarrow |Y_B|$) nämlichen digitalen Empfangssignals $y_{Bd}$ zu generieren und hernach die Amplitude und/oder die Leistung und/oder die Frequenz $f_{yB'}$ der dominierenden Signalkomponente $y_B'$ des Empfangssignals $y_B(t)$ basierend auf nämlicher diskreten Fourier-Transformation zu ermitteln. Für den vorbezeichneten Fall, daß die Betriebs- und Meßelektronik 2 dafür eingerichtet ist, auch ein Empfangssignal $y_A(t)$ des Ultraschall-Wandlers A sowie ein nämliches Empfangssignal $y_A(t)$ repräsentierendes digitales Empfangssignal $y_{Ad}$ bereitzustellen, kann die Betriebs- und Meßelektronik 2 ferner auch dafür eingerichtet sein, die Frequenz $f_{yA'}$ der dominierenden Signalkomponente $yA'$ des Empfangssignals $y_A(t)$ entsprechend basierend auf einer Betriebs- und Meßelektronik intern generierten diskreten Fourier-Transformation (DFT) des digitalen Empfangssignals $y_{Ad}$ zu ermitteln.

Unter Berücksichtigung des vorab durchaus bestimmbaren charakteristischen Übertragungsverhaltens jedes der Ultraschallwandler A und B, nicht zuletzt auch deren jeweiliger tatsächlicher 6dB-Bandbreiten $BW_{A,6dB}$ bzw. $BW_{B,6dB}$ und/oder deren tatsächlichen Amplituden- und/oder Phasenfrequenzganges oder auch deren jeweiliger Übertragungsfunktion (Systemfunktion) bzw. des daraus resultierenden Beitrags der Ultraschallwandler A und B zum charakteristischen Übertragungsverhalten der gesamten zwischen dem elektrischen Treibersignal $x_A(t)$ und dem elektrischen Empfangssignal $y_B(t)$ vermittelnden, nämlich mittels der Ultraschallwandler A, B, dem Meßrohr 10 sowie dem darin geführten Fluid FL gebildeten, Meßstrecke kann die Meßgenauigkeit des Meßsystems bei Bedarf sogar noch weiter verbessert werden, beispielsweise indem das Treibersignals $x_A(t)$ durch entsprechendes Ausgestalten von dessen Frequenzspektrum bzw. entsprechende Auswahl von dessen Bandbreite an nämliches Übertragungsverhalten der Ultraschallwandler A, B angepaßt wird. Nach einer weiteren Ausgestaltung der Erfindung ist die Betriebs- und Meßelektronik daher ferner dafür eingerichtet, das Treibersignal $x_A(t)$ so zu generieren, beispielsweise nämlich die Frequenz $f_{xA'}$ der dominierenden Signalkomponente $x_A'$ des Treibersignals $x_A(t)$ so einzustellen bzw. den vorbezeichneten Arbeitsfrequenzwert so zu setzen, daß die Frequenz $f_{xA'}$ der dominierenden Signalkomponente $x_A'$ des Treibersignals $x_A(t)$ um nicht mehr als 10 %, möglichst auch um weniger als 5 %, der Mittenfrequenz $f_{0,A}$ der 6dB-Bandbreite, $BW_{A,6dB}$, des Ultraschall-Wandlers A von der Frequenz $f_{yB'}$ der dominierenden Signalkomponente $y_B'$ des Empfangssignals abweicht, und/oder daß die Frequenz $f_{xA'}$ der dominierenden Signalkomponente $x_A'$ des Treibersignals $x_A(t)$ für den Ultraschall-Wandler A um nicht mehr als 10 %, möglichst um weniger als 5 %, der Mittenfrequenz $f_{0,B}$ der 6dB-Bandbreite $BW_{B,6dB}$ des Ultraschall-Wandlers B von der Frequenz $f_{yB'}$ der dominierenden Signalkomponente $y_B'$ des Empfangssignals abweicht.

Für den vorbezeichneten Fall, daß jeder der beiden Ultraschall-Wandler A, B dafür eingerichtet ist, intermittierend als ein elektrische Leistung in Schallleistung wandelnder Sender bzw. als ein Schallleistung in elektrische Leistung wandelnder Empfänger betrieben zu werden, und daß dementsprechend die Betriebs- und Meßelektronik 2 dafür eingerichtet ist, zum Bewirken des Empfangssignals $y_A(t)$ des Ultraschall-Wandlers A gelegentlich, insb. komplementär zum Treibersignal $x_A(t)$, auch ein Treibersignal $x_B(t)$ für Ultraschall-Wandler B zu generieren, ist die Betriebs- und Meßelektronik 2 nach einer weiteren Ausgestaltung der Erfindung ferner auch dafür eingerichtet, nämliches Treibersignal $x_B(t)$ für den Ultraschall-Wandler B so zu generieren, daß sowohl nämliches Treibersignal $x_B(t)$, als auch nämliches Empfangssignal $y_A(t)$ des Ultraschall-Wandlers A jeweils eine Vielzahl spektraler Signalkomponenten $x_{B,i}$, $y_{A,i}$, gleichwohl jeweils eine dominierende, nämlich eine jeweils maximale spektrale Leistungsdichte $S_{xxB,MAX}$; $S_{yyA,MAX}$ aufweisende, spektrale Signalkomponente $x_B'$, $y_A'$ enthalten; dies insbesondere auch in der Weise, daß eine Frequenz $f_{xB'}$ der dominierenden Signalkomponente $x_B'$ des Treibersignals $x_B(t)$ um nicht mehr als einen Betrag von $|\pm 100\,kHz|$, beispielsweise nämlich auch um einen Betrag von weniger als $|\pm 50\,kHz|$, von einer Frequenz $f_{yA'}$ der dominierenden Signalkomponente $y_A'$ des Empfangssignals $y_A(t)$ des Ultraschall-Wandlers A und/oder um nicht mehr als als 10 %, insb. um weniger als 5 %, der Frequenz $f_{yA'}$ der dominierenden Signalkomponente $y_A'$ des Empfangssignals $y_A(t)$ des Ultraschall-Wandlers A von nämlicher Frequenz $f_{yA'}$ abweicht und/oder daß die Frequenz $f_{xB'}$ um einen Betrag von nicht mehr als $|\pm 50\,kHz|$, insb. um einen Betrag weniger als $|\pm 10\,KHz|$, von der Frequenz $f_{xA'}$ der dominierenden Signalkomponente $x_A'$ des Treibersignals $x_A(t)$ bzw. um nicht mehr als 1 % der Frequenz $f_{xA'}$ von nämlicher Frequenz $f_{xA'}$ abweicht. Das Treibersignal $x_B(t)$ kann beispielsweise so ausgebildet sein, daß es einen zeitlichen Pegelverlauf aufweist, der gegenüber einem zeitlichen Pegelverlauf des Treibersignal $x_A(t)$ lediglich zeitverschoben, beispielsweise um einen einer halben Schußrate entsprechenden Zeitwert $(0,5 \cdot T_S)$, ist, ansonsten aber nämlichen Pegelverlauf des Treibersignals $x_A(t)$ zumindest für ein vorgegebenes Zeitintervall $(>> 2 \cdot T_S)$ entspricht. Dementsprechend ist die Betriebs- und Meßelektronik 2 nach einer weiteren Ausgestaltung der Erfindung ferner auch dafür eingerichtet, die Spannung $u_{B,I}$ des Treibersignals $x_B(t)$ für den Ultraschall-Wandler B zu modulieren, beispielsweise nämlich zu takten; dies im besonderen in gleicher Weise, wie beim Treibersignal $x_A(t)$ bzw. derart, daß nämliche Spannung $u_{B,I}$ als eine Folge von jeweils zwei oder mehr rechteckförmigen Spannungspulsen aufweisenden und/oder in einem vorgegebenen zeitlichen Abstand aufeinanderfolgenden Pulspaketen ausgebildet ist. Darüberhinaus kann die Betriebs- und Meßelektronik 2 auch dafür ausgestaltet sein, die Frequenz $f_{xB'}$ im Betrieb zu ändern, etwa um eine Abweichung nämlicher Frequenz $f_{xB'}$ von der Frequenz $f_{yA'}$ der dominierenden Signalkomponente $y_A'$ des Empfangssignals $y_A(t)$ des Ultraschall-Wandlers A zu verringern bzw. die Frequenz $f_{xB'}$ an die Frequenz $f_{xA'}$ entsprechend anzupassen.

**Patentansprüche**

1. Meßsystem zum Messen wenigstens eines, insb. fluiddynamischen, Parameters, insb. eine Strömungsgeschwindigkeit und/oder eine Volumendurchflußrate, eines - insb. in einer Rohrleitung strömenden - Fluids (FL), insb. einer Flüssigkeit, eines Gases, oder einer Dispersion, welches, insb. als Clamp-on-Ultraschall-Durchflußmeßgerät ausgebildete, Meßsystem umfaßt:

   - ein Rohr (10) mit einem von einer Rohrwand (10a) umgebenen Lumen (10'), welches Rohr dafür eingerichtet ist, in seinem Lumen ein Teilvolumen des Fluids zu führen bzw. vom Fluid durchströmt zu werden;
   - einen auf einer dem Lumen des Rohrs abgewandten Außenseite der Rohrwand am Rohr angebrachten, via Rohrwand an im Lumen des Rohrs geführtes Fluid akustisch gekoppelten ersten Ultraschall-Wandler (A), der dafür eingerichtet ist, eine zeitlich ändernde, insb. gepulste, elektrische Spannung in sich durch die Rohrwand und weiter durch im Lumen des Rohrs geführtes Fluid ausbreitende Ultraschallwellen ($W_{AB,I}$) zu wandeln;
   - einen im Abstand zum ersten Ultraschallwandler auf der Außenseite der Rohrwand am Rohr angebrachten, via Rohrwand an im Lumen des Rohrs geführtes Fluid akustisch gekoppelten, insb. zum ersten Ultraschallwandler baugleichen, zweiten Ultraschall-Wandler (B), der dafür eingerichtet ist, sich durch im Lumen des Rohrs geführtes Fluid und weiter durch die Rohrwand ausbreitende Ultraschallwellen ($W_{AB,II}$) zu empfangen und in eine zeitlich ändernde elektrische Spannung zu wandeln;
   - sowie eine sowohl mit dem ersten Ultraschall-Wandler als auch dem zweiten Ultraschall-Wandler elektrisch verbundene, insb. mittels eines digitalen Signalprozessors und/oder eines Mikrocontrollers gebildete, Betriebs- und Meßelektronik (2),
   - wobei die Betriebs- und Meßelektronik dafür eingerichtet ist, zum Bewirken eines eine zeitlich ändernde elektrischen Spannung, $u_{B,II}$, aufweisenden Empfangssignals, $y_B(t)$, des zweiten Ultraschall-Wandlers (B) zumindest zeitweise ein eine zeitlich veränderliche, insb. bipolare und/oder gepulste, elektrische Spannung, $u_{A,I}$, aufweisendes Treibersignal, $x_A(t)$, für den ersten Ultraschall-Wandler (A) zu generieren, derart,
   - - daß sowohl nämliches Treibersignal, $x_A(t)$, als auch nämliches Empfangssignal, $y_B(t)$, jeweils eine Vielzahl spektraler Signalkomponenten ($x_{A,i}$, $y_{B,i}$) gleichwohl jeweils eine dominierende, nämlich eine jeweils maximale spektrale Leistungsdichte ($S_{xxA,MAX}$; $S_{yyB,MAX}$) aufweisende, spektrale Signalkomponente ($x_A'$, $y_B'$) enthalten,
   - - und daß eine Frequenz, $f_{xA'}$, der dominierenden Signalkomponente ($x_A'$) des Treibersignals, $x_A(t)$, für den ersten Ultraschall-Wandler (A) um einen Betrag von nicht mehr als $|\pm 100\,\text{kHz}|$, insb. um einen Betrag von weniger als $|\pm 50\,\text{kHz}|$, von einer Frequenz, $f_{yB'}$, der dominierenden Signalkomponente ($y_B'$) des Empfangssignals, $y_B(t)$, des zweiten Ultraschall-Wandlers (B) und/oder um nicht mehr als 10 %, insb. um weniger als 5 %, der Frequenz, $f_{yB'}$, der dominierenden Signalkomponente ($y_B'$) des Empfangssignals, $y_B(t)$, des zweiten Ultraschall-Wandlers (B) von nämlicher Frequenz, $f_{yB'}$, abweicht;
   - und wobei die Betriebs- und Meßelektronik dafür eingerichtet ist,
   - - die Frequenz der dominierenden Signalkomponente ($x_A'$) des Treibersignals, $x_A(t)$, für den ersten Ultraschall-Wandler (A) zu ändern, um eine Abweichung nämlicher Frequenz von der Frequenz der dominierenden Signalkomponente ($y_B'$) des Empfangssignals, $y_B(t)$, des zweiten Ultraschall-Wandlers (B) zu verringern und/oder derart, daß eine zunächst zu große Abweichung nämlicher Frequenz von der Frequenz der dominierenden Signalkomponente ($y_B'$) des Empfangssignals, $y_B(t)$, des zweiten Ultraschall-Wandlers (B) minimiert wird,
   - - sowie mittels des Empfangssignals, $y_B(t)$, des zweiten Ultraschall-Wandlers (B), insb. sowohl mittels des Empfangssignals, $y_B(t)$, des zweiten Ultraschall-Wandlers (B) als auch mittels des Treibersignals, $x_A(t)$, für den ersten Ultraschall-Wandler (A), wenigstens einen Meßwert ($X_M$) für den wenigstens einen Parameter zu erzeugen.

2. Meßsystem nach einem der vorherigen Ansprüche,

   - wobei der erste Ultraschallwandler (A) eine sich zwischen einer unteren ersten Grenzfrequenz, $f_{u,A}$, nämlichen Ultraschallwandlers (A) und einer oberen zweiten Grenzfrequenz, $f_{o,A}$, nämlichen Ultraschallwandlers (A) erstreckende 6dB-Bandbreite, $BW_{A,6dB}$, und der zweite Ultraschallwandler eine sich zwischen einer unteren ersten Grenzfrequenz, $f_{u,B}$, nämlichen Ultraschallwandlers (B) und einer oberen zweiten Grenzfrequenz, $f_{o,B}$, nämlichen Ultraschallwandlers (B) erstreckende 6dB-Bandbreite, $BW_{B,6dB}$, aufweisen,

- und wobei die Betriebs- und Meßelektronik eingerichtet ist, das Treibersignal, $x_A(t)$, für den ersten Ultraschall-Wandler (A) so zu generieren, insb. nämlich die Frequenz, $f_{xA'}$, der dominierenden Signalkomponente ($x_A'$) des Treibersignals, $x_A(t)$, für den ersten Ultraschall-Wandler (A) so einzustellen,

- - daß die Frequenz, $f_{xA'}$, der dominierenden Signalkomponente ($x_A'$) des Treibersignals, $x_A(t)$, für den ersten Ultraschall-Wandler (A) um nicht mehr als 10 %, insb. um weniger als 5 %, einer Mittenfrequenz, $f_{0,A}$, der 6dB-Bandbreite, $BW_{A,6dB}$, des ersten Ultraschall-Wandlers (A), definiert als ein geometrisches Mittel, $\sqrt{f_{u,A} \cdot f_{o,A}}$, von dessen erster Grenzfrequenz, $f_{u,A}$, und dessen zweiter Grenzfrequenz, von der Frequenz der dominierenden Signalkomponente ($y_B'$) des Empfangssignals abweicht, und/oder

- - daß die Frequenz, $f_{xA'}$, der dominierenden Signalkomponente ($x_A'$) des Treibersignals, $x_A(t)$, für den ersten Ultraschall-Wandler (A) um nicht mehr als 10 %, insb. um weniger als 5 %, einer Mittenfrequenz, $f_{0,B}$, der 6dB-Bandbreite, $BW_{B,6dB}$, des zweiten Ultraschall-Wandlers (B), definiert als ein geometrisches Mittel, $\sqrt{f_{u,B} \cdot f_{o,B}}$, von dessen erster Grenzfrequenz, $f_{u,B}$, und dessen zweiter Grenzfrequenz, von der Frequenz der dominierenden Signalkomponente ($y_B'$) des Empfangssignals abweicht.

3.  Meßsystem nach einem der vorherigen Ansprüche,

- wobei dem Rohr Lamb-Wellen-Schwingungsmoden (S0, S1, S2 ...Sn, A0, A1, A2 ...An) innewohnen, in denen die Rohrwand Lamb-Wellen ausbildende Schwingungen ausführt bzw. ausführen kann,
- und wobei die Betriebs- und Meßelektronik dafür eingerichtet ist, das Treibersignal, $x_A(t)$, für den ersten Ultraschall-Wandler (A) so zu generieren, daß die Frequenz der dominierenden Signalkomponente ($x_A'$) nämlichen Treibersignals, $x_A(t)$, um einen Betrag von weniger als | $\pm100$ kHz |, insb. um einen Betrag weniger als | $\pm50$ kHz | , von einer Resonanzfrequenz eines der Lamb-Wellen-Schwingungsmoden und/oder um weniger als 10 %, insb. um weniger als 5 %, einer Resonanzfrequenz eines der Lamb-Wellen-Schwingungsmoden von nämlicher Resonanzfrequenz abweicht.

4.  Meßsystem nach Anspruch 2 und 3,

- wobei die Mittenfrequenz, $f_{0,A}$, der 6dB-Bandbreite, $BW_{A,6dB}$, des ersten Ultraschall-Wandlers (A) von der Resonanzfrequenz nämlichen Lamb-Wellen-Schwingungsmodes um mehr als 5% nämlicher Resonanzfrequenz abweicht; und/oder
- wobei die Mittenfrequenz, $f_{0,B}$, der 6dB-Bandbreite, $BW_{B,6dB}$, des zweiten Ultraschall-Wandlers (B) von der Resonanzfrequenz nämlichen Lamb-Wellen-Schwingungsmodes um mehr als 5% nämlicher Resonanzfrequenz abweicht.

5.  Meßsystem nach einem der vorherigen Ansprüche,

- wobei die Betriebs- und Meßelektronik dafür eingerichtet ist, ein Amplitudenspektrum, | $Y_B$|, des Empfangssignals, $y_B(t)$, des zweiten Ultraschall-Wandlers (B) zu ermitteln; und/oder
- wobei die Betriebs- und Meßelektronik dafür eingerichtet ist, eine Leistung und/oder eine Amplitude der dominierenden Signalkomponente ($y_B'$) des Empfangssignals, $y_B(t)$, des zweiten Ultraschall-Wandlers (B) zu ermitteln, insb. basierend auf einem Amplitudenspektrum, $|Y_B|$, nämlichen Empfangssignals, $y_B(t)$; und/oder
- wobei die Betriebs- und Meßelektronik dafür eingerichtet ist, die Frequenz der dominierenden Signalkomponente ($y_B'$) des Empfangssignals, $y_B(t)$, des zweiten Ultraschall-Wandlers (B) zu ermitteln, insb. basierend auf einem Amplitudenspektrum, $|Y_B|$, nämlichen Empfangssignals, $y_B(t)$; und/oder
- wobei die Betriebs- und Meßelektronik dafür eingerichtet ist, die Spannung des Treibersignals, $x_A(t)$, für den ersten Ultraschall-Wandler (A) zu modulieren, insb. zu takten und/oder derart, daß nämliche Spannung als eine Folge von jeweils zwei oder mehr rechteckförmigen Spannungspulsen aufweisenden und/oder in einem vorgegebenen zeitlichen Abstand aufeinanderfolgenden Pulspaketen ausgebildet ist.

6.  Meßsystem nach einem der vorherigen Ansprüche,

- wobei die Betriebs- und Meßelektronik dafür eingerichtet ist, die elektrische Spannung des Treibersignals,

$x_A(t)$, für den ersten Ultraschall-Wandler (A) zu modulieren, derart daß die elektrische Spannung als eine Folge von, insb. zu in einem vorgegebenen zeitlichen Abstand aufeinanderfolgenden Pulspaketen formierten und/oder rechteckförmigen, Spannungspulsen ausgebildet ist;

- und wobei die Betriebs- und Meßelektronik dafür eingerichtet ist, die Frequenz der dominierenden Signalkomponente ($x_A'$) des Treibersignals, $x_A(t)$, für den ersten Ultraschall-Wandler (A) zeitlich zu ändern, indem zeitlich aufeinanderfolgend generierte Spannungspulse unterschiedliche Pulsbreiten aufweisen.

7. Meßsystem nach einem der vorherigen Ansprüche, wobei die Betriebs- und Meßelektronik dafür eingerichtet ist, das Treibersignal, $x_A(t)$, für den ersten Ultraschall-Wandler (A) so zu generieren, daß die dominierende Signalkomponente ($x_A'$) nämlichen Treibersignals, $x_A(t)$, zunächst eine initiale, nämlich auf einen vorgegebenen, insb. basierend auf Kenndaten des Rohrs und/oder wenigstens eines Kennwerts wenigstens eines der Ultraschall-Wandler vorab ermittelter und/oder in einem einen nicht-flüchtigen Datenspeicher der Betriebs- und Meßelektronik vorgehaltenen, Startfrequenzwert justierte Frequenz aufweist, derart, daß eine Abweichung nämlicher initialen Frequenz der dominierenden Signalkomponente ($x_A'$) des Treibersignals, $x_A(t)$, für den ersten Ultraschall-Wandler (A) von der Frequenz, $f_{yB'}$, der dominierenden Signalkomponente ($y_B'$) des Empfangssignals, $y_B(t)$, des zweiten Ultraschall-Wandlers (B) größer als eine dafür momentan erreichbare minimale Abweichung ist und/oder derart, daß eine Abweichung der Frequenz, $f_{xA'}$, der dominierende Signalkomponente ($x_A'$) des Treibersignals, $x_A(t)$, für den ersten Ultraschall-Wandler (A) von der Frequenz, $f_{yB'}$, der dominierende Signalkomponente ($x_B'$) des Empfangssignals, $y_B(t)$, des zweiten Ultraschall-Wandlers (B) zunächst mehr als $| \pm 100\ kHz |$ und/oder mehr als 10 % der Frequenz, $f_{yB'}$, der dominierenden Signalkomponente ($y_B'$) des Empfangssignals, $y_B(t)$, des zweiten Ultraschall-Wandlers (B) beträgt.

8. Meßsystem nach dem vorherigen Anspruch, wobei die Betriebs- und Meßelektronik dafür eingerichtet ist, ausgehend von nämlicher initialen Frequenz die Frequenz, $f_{xA'}$, der dominierenden Signalkomponente ($x_A'$) des Treibersignals, $x_A(t)$, für den ersten Ultraschall-Wandler (A) zumindest solange zu ändern, insb. nämlich sukzessive zu erhöhen oder sukzessive zu verringern, bis die Frequenz, $f_{xA'}$, der dominierenden Signalkomponente ($x_A'$) des Treibersignals, $x_A(t)$, für den ersten Ultraschall-Wandler (A) um nicht mehr als $| \pm 100\ kHz |$, insb. um weniger als $| \pm 50\ kHz|$, von der Frequenz, $f_{yB'}$, der dominierenden Signalkomponente ($y_B'$) des Empfangssignals, $y_B(t)$, des zweiten Ultraschall-Wandlers (B) und/oder um nicht mehr als 10 %, insb. um weniger als 5 %, der Frequenz, $f_{yB'}$, der dominierenden Signalkomponente ($y_B'$) des Empfangssignals, $y_B(t)$, des zweiten Ultraschall-Wandlers (B) von nämlicher Frequenz, $f_{yB'}$, abweicht und/oder bis eine zunächst zu große Abweichung der Frequenz, $f_{xA'}$, der dominierenden Signalkomponente ($x_A'$) des Treibersignals, $x_A(t)$, für den ersten Ultraschall-Wandler (A) von der Frequenz, $f_{yB'}$, der dominierenden Signalkomponente ($y_B'$) des Empfangssignals, $y_B(t)$, des zweiten Ultraschall-Wandlers (B) auf eine dafür momentan erreichbare minimale Abweichung ($Err_f$) eingestellt ist.

9. Meßsystem nach einem der vorherigen Ansprüche,

- wobei der zweite Ultraschall-Wandler dafür eingerichtet ist, eine zeitlich ändernde elektrische Spannung in sich durch die Rohrwand und weiter durch im Lumen des Rohrs geführtes Fluid ausbreitende Ultraschallwellen zu wandeln, und
- wobei der erste Ultraschall-Wandler dafür eingerichtet ist, sich durch im Lumen des Rohrs geführtes Fluid und weiter durch die Rohrwand ausbreitende Ultraschallwellen zu empfangen und in eine zeitlich ändernde elektrische Spannung zu wandeln.

10. Meßsystem nach einem der vorherigen Ansprüche, wobei die Betriebs- und Meßelektronik dafür eingerichtet ist, zum Bewirken eines eine zeitlich ändernde elektrischen Spannung, $u_{A,II}$, aufweisenden Empfangssignals, $y_A(t)$, des ersten Ultraschall-Wandlers (A) zumindest zeitweise, insb. komplementär zum Treibersignal, $x_A(t)$, für den ersten Ultraschall-Wandler (A), ein eine zeitlich veränderliche, insb. bipolare und/oder gepulste, elektrische Spannung, $u_{B,I}$, aufweisendes, insb. zum Treibersignal für den ersten Ultraschall-Wandler (A) zumindest für ein vorgegebenes Zeitintervall komplementäres, Treibersignal, $x_B(t)$, für den zweiten Ultraschall-Wandler (B) zu generieren.

11. Meßsystem nach dem vorherigen Anspruch,

- wobei die Betriebs- und Meßelektronik dafür eingerichtet ist, den wenigstens einen Meßwert sowohl mittels des Empfangssignals, $y_B(t)$, des zweiten Ultraschall-Wandlers (B) als auch mittels des Empfangssignals, $y_A(t)$, des ersten Ultraschall-Wandlers (A) zu erzeugen, insb. basierend auf einer anhand des Empfangssignals, $y_B(t)$, des zweiten Ultraschall-Wandlers (B) und des Empfangssignals, $y_A(t)$, des ersten Ultraschall-Wandlers (A) ermittelten Laufzeitdifferenz zwischen sich durch im Lumen des Rohrs geführtes Fluid entlang einer vorgegebenen Meßstrecke, gleichwohl in entgegengesetzten Richtungen ausbreitende Ultraschallwellen und/oder basierend auf einer Kreuzkorrelation des Empfangssignals, $y_B(t)$, des zweiten Ultraschall-Wandlers (B) und des Empfangssignals, $y_A(t)$, des ersten Ultraschall-Wandlers (A); und/oder

- wobei die Betriebs- und Meßelektronik dafür eingerichtet ist, den wenigstens einen Meßwert sowohl mittels des Treibersignals, $x_A(t)$, für den ersten Ultraschall-Wandler (A) sowie des Empfangssignals, $y_B(t)$, des zweiten Ultraschall-Wandlers (B) als auch mittels des Treibersignals, $x_A(t)$, für den zweiten Ultraschall-Wandler (B) sowie des Empfangssignals, $y_B(t)$, des ersten Ultraschall-Wandlers (A) zu erzeugen, insb. basierend auf sowohl einer anhand des Treibersignals, $x_A(t)$, für den ersten Ultraschall-Wandler (A) und des Empfangssignals, $y_B(t)$, des zweiten Ultraschall-Wandlers (B) ermittelten Laufzeit für sich durch im Lumen des Rohrs geführtes Fluid entlang einer vorgegebenen Meßstrecke in Richtung vom ersten Ultraschall-Wandler (A) hin zum zweiten Ultraschall-Wandler (B) ausbreitende Ultraschallwellen als auch basierend auf einer anhand des Treibersignals, $x_B(t)$, für den zweiten Ultraschall-Wandler (B) und des Empfangssignals, $y_A(t)$, des ersten Ultraschall-Wandlers (A) ermittelten Laufzeit für sich durch im Lumen des Rohrs geführtes Fluid entlang nämlicher Meßstrecke in Richtung vom zweiten Ultraschall-Wandler (B) hin zum ersten Ultraschall-Wandler (A) ausbreitende Ultraschallwellen; und/oder

- wobei die Betriebs- und Meßelektronik dafür eingerichtet ist, das Treibersignal, $x_B(t)$, für den zweiten Ultraschall-Wandler (B) so zu generieren, daß sowohl nämliches Treibersignal, $x_B(t)$, als auch das Empfangssignal, $y_A(t)$, des ersten Ultraschall-Wandlers (A) jeweils eine Vielzahl spektraler Signalkomponenten ($x_{B,i}$, $y_{A,i}$) gleichwohl jeweils eine dominierende, nämlich eine jeweils maximale spektrale Leistungsdichte ($S_{xxB,MAX}$; $S_{yyA,MAX}$) aufweisende, spektrale Signalkomponente ($x_B'$, $y_A'$) enthalten; und/oder

- wobei die Betriebs- und Meßelektronik dafür eingerichtet ist, das Treibersignal, $xB(t)$, für den zweiten Ultraschall-Wandler (B) komplementär zum Treibersignal, $xA(t)$, für den ersten Ultraschall-Wandler (A) zu generieren; und/oder

- wobei die Betriebs- und Meßelektronik dafür eingerichtet ist, das Treibersignal, $x_B(t)$, für den zweiten Ultraschall-Wandler (B) so zu generieren, daß eine Frequenz, $f_{xB'}$, der dominierenden Signalkomponente ($x_B'$) des Treibersignals, $x_B(t)$, für den zweiten Ultraschall-Wandler (B) um nicht mehr als einen Betrag von $|\pm 100\ kHz|$, insb. um einen Betrag von weniger als $|\pm 50\ kHz|$, von einer Frequenz, $f_{yA'}$, der dominierenden Signalkomponente ($y_A'$) des Empfangssignals, $y_A(t)$, des ersten Ultraschall-Wandlers (A) und/oder um nicht mehr als 10 %, insb. um weniger als 5 %, der Frequenz, $f_{yA'}$, der dominierenden Signalkomponente ($y_A'$) des Empfangssignals des ersten Ultraschall-Wandlers (A) von nämlicher Frequenz, $f_{yA'}$, abweicht; und/oder

- wobei die Betriebs- und Meßelektronik dafür eingerichtet ist, das Treibersignal, $x_A(t)$, für den ersten Ultraschall-Wandler (A) und das Treibersignal, $x_B(t)$, für den zweiten Ultraschall-Wandler (B) jeweils so zu generieren, daß eine Frequenz, $f_{xB'}$, der dominierenden Signalkomponente ($x_B'$) des Treibersignals, $x_B(t)$, für den zweiten Ultraschall-Wandler (B) um einen Betrag von nicht mehr als $|\pm 50\ kHz|$, insb. um einen Betrag weniger als $|\pm 10\ KHz|$, von einer Frequenz, $f_{yA'}$, der dominierenden Signalkomponente ($x_A'$) des Treibersignals, $x_A(t)$, für den ersten Ultraschall-Wandler (A) und/oder um nicht mehr als 1 % der Frequenz, $f_{xA'}$, der dominierenden Signalkomponente ($x_A'$) des Treibersignals, $x_A(t)$, für den ersten Ultraschall-Wandler (A) von nämlicher Frequenz, $f_{xA'}$, abweicht.

**12.** Meßsystem nach einem der Ansprüche 10 bis 11,

- wobei die Betriebs- und Meßelektronik dafür eingerichtet ist, das Empfangssignal, $y_A(t)$, des ersten Ultraschall-Wandlers (A) in ein nämliches Empfangssignal, $y_A(t)$, repräsentierendes digitales Empfangssignal, $y_{Ad}$, zu wandeln,

- und wobei die Betriebs- und Meßelektronik dafür eingerichtet ist, den wenigstens einen Meßwert für den wenigstens einen Parameter mittels nämlichen, das Empfangssignal, $y_A(t)$, des ersten Ultraschall-Wandlers (A) repräsentierenden digitalen Empfangssignals, $y_{Ad}$, zu erzeugen.

**13.** Meßsystem nach einem der vorherigen Ansprüche,

- wobei die Betriebs- und Meßelektronik dafür eingerichtet ist, das Empfangssignal, $y_B(t)$, des zweiten Ultraschall-Wandlers (B) in ein nämliches Empfangssignal, $y_B(t)$, repräsentierendes digitales Empfangssignal, $y_{Bd}$, zu wandeln,

- und wobei die Betriebs- und Meßelektronik dafür eingerichtet ist, den wenigstens einen Meßwert für den wenigstens einen Parameter mittels nämlichen, das Empfangssignal, $y_B(t)$, des zweiten Ultraschall-Wandlers (B) repräsentierenden digitalen Empfangssignals, $y_{Bd}$, zu erzeugen.

**14.** Meßsystem nach einem der vorherigen Ansprüche, wobei die Betriebs- und Meßelektronik einen, insb. nicht-flüchtigen, Datenspeicher zum Speichern digitaler Daten, insb. wenigstens eines Parameterwerts für wenigstens einen das Treibersignal für den ersten Ultraschall-Wandler (A) charakterisierende Einstellparameter, aufweist.

15. Meßsystem nach dem vorherigen Anspruch, wobei die Betriebs- und Meßelektronik dafür eingerichtet, ist Parameterwerte für wenigstens einen das Treibersignal für den ersten Ultraschall-Wandler (A) charakterisierende Einstellparameter wiederkehrend in nämlichem Datenspeicher abzuspeichern, insb. jeweils zusammen mit einem einen Zeitpunkt eines Einstellens bzw. eines Abspeichern des jeweiligen Parameterwerts repräsentierenden Zeitwerts.

16. Meßsystem nach dem vorherigen Anspruch,

- wobei die Betriebs- und Meßelektronik dafür eingerichtet ist, unter Verwendung von im Datenspeicher (MEM) abgespeicherten Parameterwerten für den wenigstens einen das Treibersignal für den ersten Ultraschall-Wandler (A) charakterisierenden Einstellparameter eine Überprüfung einer Funktionstüchtigkeit des Meßsystems, insb. nämlich eine Überprüfung einer Funktionstüchtigkeit des ersten Ultraschall-Wandlers (A) und/oder des zweiten Ultraschall-Wandler (B), und/oder eine Überprüfung einer Integrität des Rohrs durchzuführen; und/oder
- wobei die Betriebs- und Meßelektronik dafür eingerichtet ist, unter Verwendung wenigstens eines im Datenspeicher abgespeicherten Parameterwerts für den wenigstens einen das Treibersignal für den ersten Ultraschall-Wandler (A) charakterisierenden Einstellparameter eine Degradation des Rohrs, insb. eine Veränderung einer Wandstärke der Rohrwand, und/oder eine Veränderung einer Übertragungsfunktion zumindest eines der beiden Ultraschall-Wandler zu detektieren.

17. Meßsystem nach einem der vorherigen Ansprüche,

- wobei der erste Ultraschall-Wandler dafür eingerichtet ist, intermittierend als ein elektrische Leistung in Schallleistung wandelnder Sender bzw. als ein Schallleistung in elektrische Leistung wandelnder Empfänger betrieben zu werden; und/oder
- wobei der zweite Ultraschall-Wandler dafür eingerichtet ist, intermittierend, insb. komplementär zum ersten Ultraschall-Wandler, als ein Schallleistung in elektrische Leistung wandelnder Empfänger bzw. als ein elektrische Leistung in Schallleistung wandelnder Sender betrieben zu werden.

18. Verwenden eines Meßsystems nach einem der vorherigen Ansprüche zum Messen einer Strömungsgeschwindigkeit und/oder einer Volumendurchflußrate und/oder einer Dichte eines in einer Rohrleitung strömenden Fluids, insb. einer Flüssigkeit, eines Gases, oder einer Dispersion.

## Claims

1. Measuring system designed to measure at least a parameter, particularly a fluid-dynamic parameter, particularly a flow velocity and/or a volume flow rate, of a fluid (FL), particularly flowing in a pipe, particularly a liquid, a gas or a dispersion, wherein said measuring system is particularly designed as a clamp-on ultrasonic flowmeter and wherein said system comprises:

- a tube (10) with an interior channel (10') surrounded by a tube wall (10a), wherein said tube is designed to conduct a partial volume of the fluid in its interior channel or to have fluid flow through it;
- a first ultrasonic transducer (A) mounted on the tube on an outer side of the tube wall facing away from the interior channel of the tube, wherein said transducer is coupled acoustically via the tube wall to fluid conducted in the interior channel of the tube, and is designed to convert an electrical voltage that varies over time, particularly pulsed, to ultrasonic waves ($W_{AB,I}$) propagating through the tube wall and further through the fluid conducted in the interior channel of the tube;
- a second ultrasonic transducer (B), particularly identical in design to the first ultrasonic transducer and arranged on the tube at a distance from the first ultrasonic transducer, on the outer side of the tube wall, wherein the second transducer is coupled acoustically via the tube wall to a fluid conducted in the interior channel of the tube, wherein said second transducer is designed to receive ultrasonic waves ($W_{AB,II}$) propagating through the fluid conducted in the interior channel of the tube and further through the tube wall, and to convert them to an electrical voltage that varies over time;
- as well as an operating and measuring electronics unit (2) electrically connected to both the first ultrasonic transducer and to the second ultrasonic transducer, wherein said electronics unit is formed particularly by means of a digital signal processor and/or a microcontroller,
- wherein the operating and measuring electronics unit is designed to at least temporarily generate a driver signal, $x_A(t)$, for the first ultrasonic transducer (A), that has an electrical voltage, $u_{A,I}$, that is variable over time, particularly a bipolar and/or pulsed voltage, to produce a reception signal, $y_B(t)$, of the second ultrasonic transducer (B) that has an electrical voltage, $u_{B,II}$, that is variable over time, in such a way that,

-- both said driver signal, $x_A(t)$, and said reception signal, $y_B(t)$, each contain multiple spectral signal components ($x_{A,i}$, $y_{B,i}$) but nonetheless each have a dominant spectral signal component ($x_A'$, $y_B'$), specifically having a maximum spectral power density ($S_{xxA,MAX}$, $S_{yyB,MAX}$),

-- and that a frequency, $f_{xA'}$, of the dominant signal component ($x_A'$) of the driver signal, $x_A(t)$, for the first ultrasonic transducer (A), deviates by not more than $|\pm 100\text{ kHz}|$, particularly by less than $|\pm 50\text{ kHz}|$, from a frequency, $f_{yB'}$, of the dominant signal component ($y_B'$) of the reception signal, $y_B(t)$, of the second ultrasonic transducer (B) and/or by not more than 10 %, particularly by less than 5 %, of the frequency, $f_{yB'}$, of the dominant signal component ($y_B'$) of the reception signal, $y_B(t)$, of the second ultrasonic transducer (B) from said frequency, $f_{yB'}$;

- and wherein the operating and measuring electronics unit is designed to

-- change the frequency of the dominant signal component ($x_A'$) of the driver signal, $x_A(t)$, for the first ultrasonic transducer (A), in order to reduce a deviation of said frequency from the frequency of the dominant signal component ($y_B'$) of the reception signal, $y_B(t)$, of the second ultrasonic transducer (B) and/or in such a way that an initially too large deviation of said frequency from the frequency of the dominant signal component ($y_B'$) of the reception signal, $y_B(t)$, of the second ultrasonic transducer (B) is minimized,

-- and to generate at least one measured value ($X_M$) for the at least one parameter using the reception signal, $y_B(t)$, of the second ultrasonic transducer (B), particularly using both the reception signal, $y_B(t)$, of the second ultrasonic transducer (B) and using the driver signal, $x_A(t)$, for the first ultrasonic transducer (A).

2. Measuring system as claimed in one of the previous claims,

- wherein the first ultrasonic transducer (A) has a 6dB bandwidth, $BW_{A,6dB}$, extending between a lower first limit frequency, $f_{u,A}$, of said ultrasonic transducer (A) and an upper second limit frequency, $f_{0,A}$, of said ultrasonic transducer (A), and wherein the second ultrasonic transducer has a 6dB bandwidth, $BW_{B,6dB}$, extending between a lower first limit frequency, $f_{u,B}$, of said ultrasonic transducer (B) and an upper second limit frequency, $f_{0,B}$, of said ultrasonic transducer (B),

- and wherein the operating and measuring electronics unit is designed to generate the driver signal, $x_A(t)$, for the first ultrasonic transducer (A), particularly to control the frequency, $f_{xA'}$, of the dominant signal component ($x_A'$) of the driver signal, $x_A(t)$, for the first ultrasonic transducer (A), in such a way,

-- that the frequency, $f_{xA'}$, of the dominant signal component ($x_A'$) of the driver signal, $x_A(t)$, for the first ultrasonic transducer (A) does not deviate by more than 10 %, particularly by less than 5 %, of a center frequency, $f_{0,A}$, of the 6dB bandwidth, $BW_{A,6dB}$, of the first ultrasonic transducer (A), defined as a geometric mean, $\sqrt{f_{u,A} \cdot f_{o,A}}$, of its first limit frequency, $f_{u,A}$, and of its second limit frequency, from the frequency of the dominant signal component ($y_B'$) of the reception signal, and/or

-- that the frequency, $f_{xA'}$, of the dominant signal component ($x_A'$) of the driver signal, $x_A(t)$, for the first ultrasonic transducer (A) does not deviate by more than 10 %, particularly by less than 5 %, of a center frequency, $f_{0,B}$, of the 6dB bandwidth, $BW_{B,6dB}$, of the second ultrasonic transducer (B), defined as a geometric mean, $\sqrt{f_{u,B} \cdot f_{o,B}}$, of its first limit frequency, $f_{u,B}$, and of its second limit frequency, from the frequency of the dominant signal component ($y_B'$) of the reception signal.

3. Measuring system as claimed in one of the previous claims,

- wherein Lamb wave vibration modes (S0, S1, S2 ...Sn, A0, A1, A2 ...An) are inherent to the tube, wherein in said modes the tube wall performs or can perform vibrations forming Lamb waves,

- and wherein the operating and measuring electronics unit is designed to generate the driver signal, $x_A(t)$, for the first ultrasonic transducer (A) in such a way that the frequency of the dominant signal component ($x_A'$) of said driver signal, $x_A(t)$, deviates by less than $|\pm 100\text{ kHz}|$, particularly by less than $|\pm 50\text{ kHz}|$, from a resonance frequency of one of the Lamb wave vibration modes and/or by less than 10 %, particularly less than 5 %, of a resonance frequency of one of the Lamb wave vibration modes from said resonance frequency.

4. Measuring system as claimed in Claim 2 and 3,

- wherein the center frequency, $f_{0,A}$, of the 6dB bandwidth, $BW_{A,6dB}$, of the first ultrasonic transducer (A) deviates from the resonance frequency of the Lamb wave vibration mode by more than 5 % of said resonance frequency; and/or

- wherein the center frequency, $f_{o,B}$, of the 6dB bandwidth, $BW_{B,6dB}$, of the second ultrasonic transducer (B) deviates from the resonance frequency of the Lamb wave vibration mode by more than 5 % of said resonance frequency.

**5.** Measuring system as claimed in one of the previous claims,

- wherein the operating and measuring electronics unit is designed to determine an amplitude spectrum, $|Y_B|$, of the reception signal, $y_B(t)$, of the second ultrasonic transducer (B); and/or

- wherein the operating and measuring electronics unit is designed to determine a power and/or an amplitude of the dominant signal component ($y_B'$) of the reception signal, $y_B(t)$, of the second ultrasonic transducer (B), particularly on the basis of an amplitude spectrum, $|Y_B|$, of the reception signal, $y_B(t)$; and/or

- wherein the operating and measuring electronics unit is designed to determine the frequency of the dominant signal component ($y_B'$) of the reception signal, $y_B(t)$, of the second ultrasonic transducer (B), particularly on the basis of an amplitude spectrum, $|Y_B|$, of the reception signal, $y_B(t)$; and/or

- wherein the operating and measuring electronics unit is designed to modulate, particularly to time, the voltage of the driver signal, $x_A(t)$, for the first ultrasonic transducer (A), and/or such that the voltage is formed as a series of consecutive pulse packages having two or more rectangular voltage pulses and/or following one another in a predefined time interval.

**6.** Measuring system as claimed in one of the previous claims,

- wherein the operating and measuring electronics unit is designed to modulate the electrical voltage of the driver signal, $x_A(t)$, for the first ultrasonic transducer (A), in such a way that the electrical voltage is formed as a series of voltage pulses, particularly formed as pulse packages and/or rectangular pulses following one another in a predefined time interval;

- and wherein the operating and measuring electronics unit is designed to modify over time the frequency of the dominant signal component ($x_A'$) of the driver signal, $x_A(t)$, for the first ultrasonic transducer (A), in that voltage pulses generated consecutively over time have different pulse widths.

**7.** Measuring system as claimed in one of the previous claims, wherein the operating and measuring electronics unit is designed to generate the driver signal, $x_A(t)$, for the first ultrasonic transducer (A) in such a way that the dominant signal component ($x_A'$) of said driver signal, $x_A(t)$, initially has an initial frequency, i.e. a frequency adjusted to a predefined starting frequency value, particularly determined in advance on the basis of characteristic data of the tube and/or of at least one characteristic value of at least one of the ultrasonic transducers and/or saved in a non-volatile data memory of the operating and measuring electronics unit, in such a way that a deviation of said initial frequency of the dominant signal component ($x_A'$) of the driver signal, $x_A(t)$, for the first ultrasonic transducer (A) from the frequency, $f_{yB'}$, of the dominant signal component ($y_B'$) of the reception signal, $y_B(t)$, of the second ultrasonic transducer (B) is greater than a minimum deviation minimum that can currently be achieved for this, and/or in such a way that a deviation of the frequency, $f_{xA'}$, of the dominant signal component ($x_A'$) of the driver signal, $x_A(t)$, for the first ultrasonic transducer (A) from the frequency, $f_{yB'}$, of the dominant signal component ($x_B'$) of the reception signal, $y_B(t)$, of the second ultrasonic transducer (B) is initially greater than $|\pm 100\ kHz|$ and/or greater than 10 % of the frequency, $f_{yB'}$, of the dominant signal component ($y_B'$) of the reception signal, $y_B(t)$, of the second ultrasonic transducer (B).

**8.** Measuring system as claimed in the previous claim, wherein, starting from the initial frequency, the operating and measuring electronics unit is designed to modify the frequency, $f_{xA'}$, of the dominant signal component ($x_A'$) of the driver signal, $x_A(t)$, for the first ultrasonic transducer (A), particularly to gradually increase or gradually decrease it, at least until the frequency, $f_{xA'}$, of the dominant signal component ($x_A'$) of the driver signal, $x_A(t)$, for the first ultrasonic transducer (A) does not deviate by more than $|\pm 100\ kHz|$, particularly by less than $|\pm 50\ kHz|$, from the frequency, $f_{yB'}$, of the dominant signal component ($y_B'$) of the reception signal, $y_B(t)$, of the second ultrasonic transducer (B) and/or by not more than 10 %, particularly by less than 5 %, of the frequency, $f_{yB'}$, of the dominant signal component ($y_B'$) of the reception signal, $y_B(t)$, of the second ultrasonic transducer (B), from the frequency $f_{yB'}$, and/or until an initially too large deviation of the frequency, $f_{xA'}$, of the dominant signal component ($x_A'$) of the driver signal, $x_A(t)$, for the first ultrasonic transducer (A), from the frequency, $f_{yB'}$, of the dominant signal component ($y_B'$) of the reception signal, $y_B(t)$, of the second ultrasonic transducer (B) is regulated to a minimum deviation ($Err_f$) that can currently be achieved for this.

9. Measuring system as claimed in one of the previous claims,

   - wherein the second ultrasonic transducer is designed to convert an electrical voltage that varies over time to ultrasonic waves propagating through the tube wall and further through the fluid conducted in the interior channel of the tube, and
   - wherein the first ultrasonic transducer is designed to receive ultrasonic waves propagating through the fluid conducted in the interior channel of the tube and further through the tube wall and convert them to an electrical voltage that varies over time.

10. Measuring system as claimed in one of the previous claims, wherein, for the purpose of producing a reception signal, $y_A(t)$, of the first ultrasonic transducer (A) that has an electrical voltage, $u_{A,II}$, that varies over time the operating and measuring electronics unit is designed to at least temporarily generate - particularly in a manner that is complementary to the driver signal, $x_A(t)$, for the first ultrasonic transducer (A) - a driver signal, $x_B(t)$, for the second ultrasonic transducer (B) that has an electrical voltage, $u_{B,I}$, that varies over time, and is particularly bipolar and/or pulsed, particularly complementary to the driver signal for the first ultrasonic transducer, (A), at least for a predefined time interval.

11. Measuring system as claimed in the previous claim,

   - wherein the operating and measuring electronics unit is designed to generate the at least one measured value both using the reception signal, $y_B(t)$, of the second ultrasonic transducer (B) and using the reception signal, $y_A(t)$, of the first ultrasonic transducer (A), particularly on the basis of a transit time difference, determined using the reception signal, $y_B(t)$, of the second ultrasonic transducer (B) and the reception signal, $y_A(t)$, of the first ultrasonic transducer (A), between ultrasonic waves propagating in opposite directions through the fluid conducted in the interior channel of the tube along a predefined measuring section, and/or on the basis of a cross-correlation of the reception signal, $y_B(t)$, of the second ultrasonic transducer (B) and the reception signal, $y_A(t)$, of the first ultrasonic transducer (A); and/or
   - wherein the operating and measuring electronics unit is designed to generate the at least one measured value both using the driver signal, $x_A(t)$, for the first ultrasonic transducer (A) and using the reception signal, $y_B(t)$, of the second ultrasonic transducer (B) as well as using the driver signal, $x_A(t)$, for the second ultrasonic transducer (B) and the reception signal, $y_B(t)$, of the first ultrasonic transducer (A), particularly based on both a transit time determined using the driver signal, $x_A(t)$, for the first ultrasonic transducer (A) and the reception signal, $y_B(t)$, of the second ultrasonic transducer (B) for ultrasonic waves propagating through the fluid conducted in the interior channel of the tube along a predefined measuring section in the direction of the first ultrasonic transducer (A) towards the second ultrasonic transducer (B), and based on a transit time determined using the driver signal, $x_B(t)$, for the second ultrasonic transducer (B), and the reception signal, $y_A(t)$, of the first ultrasonic transducer (A) for ultrasonic waves propagating through the fluid conducted in the interior channel of the tube along said measuring section in the direction of the second ultrasonic transducer (B) towards the first ultrasonic transducer (A); and/or
   - wherein the operating and measuring electronics unit is designed to generate the driver signal, $x_B(t)$, for the second ultrasonic transducer (B) in such a way that both the driver signal, $x_B(t)$, and the reception signal, $y_A(t)$, of the first ultrasonic transducer (A) each contain multiple spectral signal components ($x_{B,i}$, $y_{A,i}$), each nevertheless having a dominant spectral signal component ($x_B'$, $y_A'$), i.e. having a maximum spectral power density ($S_{xxS,MAX}$, $S_{yyA,MAX}$); and/or
   - wherein the operating and measuring electronics unit is designed to generate the driver signal, $x_B(t)$, for the second ultrasonic transducer (B) in a manner that is complementary to the driver signal, $x_A(t)$, for the first ultrasonic transducer (A); and/or
   - wherein the operating and measuring electronics unit is designed to generate the driver signal, $x_B(t)$, for the second ultrasonic transducer (B) in such a way that a frequency, $f_{xB'}$, of the dominant signal component ($x_B'$) of the driver signal, $x_B(t)$, for the second ultrasonic transducer (B) does not deviate by more than $|\pm 100\,\text{kHz}|$, particularly by less than $|\pm 50\,\text{kHz}|$, from a frequency, $f_{yA}$, of the dominant signal component ($y_A'$) of the reception signal, $y_A(t)$, of the first ultrasonic transducer (A) and/or by not more than 10 %, particularly by less than 5 %, of the frequency, $f_{yA}$, of the dominant signal component ($y_A'$) of the reception signal of the first ultrasonic transducer (A) from said frequency, $f_{yA}$; and/or
   - wherein the operating and measuring electronics unit is designed to generate the driver signal, $x_A(t)$, for the first ultrasonic transducer (A) and the driver signal, $x_B(t)$, for the second ultrasonic transducer (B), respectively, in such a way that a frequency, $f_{xB'}$, of the dominant signal component ($x_B'$) of the driver signal, $x_B(t)$, for the second ultrasonic transducer (B), deviates by not more than $|\pm50\ \text{kHz}|$, particularly by less than $|\pm10\ \text{KHz}|$, from a frequency, $f_{yA}$, of the dominant signal component ($x_A'$) of the driver signal, $x_A(t)$, for the first ultrasonic transducer (A) and/or by not more than 1 % of the frequency, $f_{xA'}$, of the dominant signal component ($x_A'$) of the driver signal, $x_A(t)$, for the first ultrasonic transducer (A), from said frequency, $f_{xA'}$.

**12.** Measuring system as claimed in one of the Claims 10 to 11,

- wherein the operating and measuring electronics unit is designed to convert the reception signal, $y_A(t)$, of the first ultrasonic transducer (A) to a digital reception signal, $y_{Ad}$, representing said reception signal, $y_A(t)$,
- and wherein the operating and measuring electronics unit is designed to generate the at least one measured value for the at least one parameter using the digital reception signal, $y_{Ad}$, representing the reception signal $y_A(t)$ of the first ultrasonic transducer (A).

**13.** Measuring system as claimed in one of the previous claims,

- wherein the operating and measuring electronics unit is designed to convert the reception signal, $y_B(t)$, of the second ultrasonic transducer (B) to a digital reception signal, $y_{Bd}$, representing said reception signal, $y_B(t)$,
- and wherein the operating and measuring electronics unit is designed to generate the at least one measured value for the at least one parameter using the digital reception signal, $y_{Bd}$, representing the reception signal $y_B(t)$ of the second ultrasonic transducer (B).

**14.** Measuring system as claimed in one of the previous claims, wherein the operating and measuring electronics unit has a data memory, particularly non-volatile, wherein said memory is designed to save digital data, particularly at least one parameter value for at least one configuration parameter characterizing the driver signal for the first ultrasonic transducer (A).

**15.** Measuring system as claimed in the previous claim, wherein the operating and measuring electronics unit is designed to repeatedly save - in the data memory - parameter values for at least a configuration parameter characterizing the driver signal for the first ultrasonic transducer (A), particularly in each case together with a time value representing a time when the parameter value is configured or saved.

**16.** Measuring system as claimed in the previous claim,

- wherein, using parameter values saved in the data memory (MEM) for the at least one configuration parameter characterizing the driver signal for the first ultrasonic transducer (A), the operating and measuring electronics unit is designed to carry out a check on the functional integrity of the measuring system, particularly a check on the functional integrity of the first ultrasonic transducer (A) and/or of the second ultrasonic transducer (B), and/or a check on the integrity of the tube; and/or
- wherein, using at least a parameter value saved in the data memory for the at least one configuration parameter characterizing the driver signal for the first ultrasonic transducer (A), the operating and measuring electronics unit is designed to detect a degradation of the tube, particularly a change in a thickness of the tube wall, and/or a change in a transmission function of at least one of the two ultrasonic transducers.

**17.** Measuring system as claimed in one of the previous claims,

- wherein the first ultrasonic transducer is designed to be operated intermittently as a transmitter that converts electrical power to acoustic power or as a receiver that converts acoustic power to electrical power; and/or
- wherein the second ultrasonic transducer is designed to be operated intermittently, particularly in a manner that is complementary to the first ultrasonic transducer, as a receiver that converts acoustic power to electrical power or as a transmitter that converts electrical power to acoustic power.

**18.** Use of a measuring system as claimed in one of the previous claims, wherein said system is designed to measure a flow velocity and/or a volume flow rate and/or a density of a fluid, particularly of a liquid, a gas or a dispersion, flowing through a pipe.

**EP 3 298 354 B1**

## Revendications

1. Système de mesure destiné à mesurer au moins un paramètre, notamment fluidodynamique, notamment une vitesse d'écoulement et/ou un débit volumique, d'un fluide (FL), notamment d'un liquide, d'un gaz ou d'une dispersion, s'écoulant notamment dans une conduite, lequel système de mesure est notamment constitué d'un débitmètre à ultrasons de type clamp-on et lequel système comprend :

   - un tube (10) avec un canal intérieur (10') entouré par une paroi de tube (10a), lequel tube est conçu pour guider dans son canal intérieur un volume partiel du fluide ou pour être traversé par le fluide ;
   - un premier transducteur à ultrasons (A) monté sur le tube sur un côté extérieur de la paroi du tube opposé au canal intérieur du tube, lequel transducteur est couplé acoustiquement via la paroi du tube à un fluide guidé dans le canal intérieur du tube, lequel transducteur est conçu pour convertir une tension électrique variant dans le temps, notamment pulsée, en ondes ultrasonores ($W_{AB,I}$) se propageant à travers la paroi du tube et plus loin à travers le fluide guidé dans le canal intérieur du tube ;
   - un deuxième transducteur à ultrasons (B), notamment de construction identique au premier transducteur à ultrasons et disposé sur le tube à distance du premier transducteur à ultrasons, sur le côté extérieur de la paroi du tube, lequel deuxième transducteur est couplé acoustiquement via la paroi du tube à un fluide guidé dans le canal intérieur du tube, lequel deuxième transducteur est conçu pour recevoir des ondes ultrasonores ($W_{AB,II}$) se propageant à travers le fluide guidé dans le canal intérieur du tube et plus loin à travers la paroi du tube, et pour les convertir en une tension électrique variant dans le temps ;
   - ainsi qu'une électronique d'exploitation et de mesure (2) reliée électriquement aussi bien au premier transducteur à ultrasons qu'au deuxième transducteur à ultrasons, laquelle électronique est formée notamment au moyen d'un processeur de signaux numériques et/ou d'un microcontrôleur,
   - l'électronique d'exploitation et de mesure étant conçue pour générer, pour le premier transducteur à ultrasons (A), au moins temporairement, un signal d'attaque, $x_A(t)$, présentant une tension électrique, $u_{B,II}$, variable dans le temps, pour provoquer un signal de réception, $y_B(t)$, du deuxième transducteur à ultrasons (B), notamment une tension électrique, $u_{A,I}$, variable dans le temps, bipolaire et/ou puisée, de telle manière,
   - - qu'aussi bien ledit signal d'attaque, $x_A(t)$, que ledit signal de réception, $y_B(t)$, contiennent chacun une pluralité de composantes de signal spectrales ($x_{A,i}$, $y_{B,i}$) tout en ayant chacune une composante de signal spectrale dominante ($x_A$', $x_B$'), à savoir une densité de puissance spectrale maximale respective ($S_{xxA,MAX}$, $S_{yyB,MAX}$),
   - - et qu'une fréquence, $f_{xA}$', de la composante de signal dominante ($x_A$') du signal d'attaque, $x_A(t)$, pour le premier transducteur à ultrasons (A), diffère d'une valeur non supérieure à $|\pm 100\ kHz|$, notamment d'une valeur de moins de $|\pm 50\ kHz|$, par rapport à une fréquence, $f_{yB}$', de la composante de signal dominante ($y_B$') du signal de réception, $y_B(t)$, du deuxième transducteur à ultrasons (B) et/ou de pas plus de 10 %, notamment de moins de 5 %, de la fréquence, $f_{yB}$', de la composante de signal dominante ($y_B$') du signal de réception, $y_B(t)$, du deuxième transducteur à ultrasons (B) par rapport à la même fréquence, $f_{yB}$' ;
   - et système pour lequel l'électronique d'exploitation et de mesure est conçue pour
   - - modifier la fréquence de la composante de signal dominante ($x_A$') du signal d'attaque, $x_A(t)$, pour le premier transducteur à ultrasons (A), afin de réduire un écart de ladite fréquence par rapport à la fréquence de la composante de signal dominante ($y_B$') du signal de réception, $y_B(t)$, du deuxième transducteur à ultrasons (B) et/ou de telle sorte qu'un écart initialement trop important de ladite fréquence par rapport à la fréquence de la composante de signal dominante ($y_B$') du signal de réception, $y_B(t)$, du deuxième transducteur à ultrasons (B) soit minimisé,
   - - ainsi qu'au moyen du signal de réception, $y_B(t)$, du deuxième transducteur à ultrasons (B), notamment aussi bien au moyen du signal de réception, $y_B(t)$, du deuxième transducteur à ultrasons (B) qu'au moyen du signal d'attaque, $x_A(t)$, pour le premier transducteur à ultrasons (A), à générer au moins une valeur mesurée ($X_M$) pour l'au moins un paramètre.

2. Système de mesure selon l'une des revendications précédentes,

   - pour lequel le premier transducteur à ultrasons (A) présente une largeur de bande de 6 dB, $BW_{A,6dB}$, s'étendant entre une première fréquence limite inférieure, $f_{u,A}$, dudit transducteur à ultrasons (A) et une deuxième fréquence limite supérieure, $f_{o,A}$, dudit transducteur à ultrasons (A), et le deuxième transducteur à ultrasons présente une largeur de bande de 6 dB, $BW_{B,6dB}$, s'étendant entre une première fréquence limite inférieure, $f_{u,B}$, dudit transducteur à ultrasons (B) et une deuxième fréquence limite supérieure, $f_{o,B}$, dudit transducteur à ultrasons (B),
   - et l'électronique d'exploitation et de mesure étant conçue pour générer le signal d'attaque, $x_A(t)$, pour le premier transducteur à ultrasons (A), notamment pour régler la fréquence, $f_{xA}$', de la composante de signal dominante ($x_A$') du signal d'attaque, $x_A(t)$, pour le premier transducteur à ultrasons (A), de telle sorte,

- - que la fréquence, $f_{xA'}$, de la composante de signal dominante ($x_A$') du signal d'attaque, $x_A(t)$, pour le premier transducteur à ultrasons (A) ne diffère pas de plus de 10 %, notamment de moins de 5 %, d'une fréquence centrale, $f_{0,A}$, de la largeur de bande de 6 dB, $BW_{A,6dB}$, du premier transducteur à ultrasons (A), définie comme une moyenne géométrique, $\sqrt{f_{u,A} \cdot f_{o,A}}$, de sa première fréquence limite, $f_{u,A}$, et de sa deuxième fréquence limite, par rapport à la fréquence de la composante de signal dominante ($y_B$') du signal de réception, et/ou

- - que la fréquence, $f_{xA'}$, de la composante de signal dominante ($x_A$') du signal d'attaque, $x_A(t)$, pour le premier transducteur à ultrasons (A) ne diffère pas de plus de 10 %, notamment de moins de 5 %, d'une fréquence centrale, $f_{0,B}$, de la largeur de bande de 6 dB, $BW_{B,6dB}$, du deuxième transducteur à ultrasons (B), définie comme une moyenne géométrique, $\sqrt{f_{u,B} \cdot f_{o,B}}$, de sa première fréquence limite, $f_{u,B}$, et de sa deuxième fréquence limite, par rapport à la fréquence de la composante de signal dominante ($y_B$') du signal de réception.

3. Système de mesure selon l'une des revendications précédentes,

   - pour lequel des modes de vibration d'onde de Lamb (S0, S1, S2 ...Sn, A0, A1, A2 ...An) sont inhérents au tube, modes dans lesquels la paroi du tube exécute ou peut exécuter des vibrations formant des ondes de Lamb,
   - et pour lequel l'électronique d'exploitation et de mesure est conçue pour générer le signal d'attaque, $x_A(t)$, pour le premier transducteur à ultrasons (A) de telle sorte que la fréquence de la composante de signal dominante ($x_A$') du même signal d'attaque, $x_A(t)$, diffère d'une valeur inférieure à $|\pm100$ kHz|, notamment d'une valeur inférieure à $|\pm50$ kHz|, par rapport à une fréquence de résonance de l'un des modes de vibration d'onde de Lamb et/ou de moins de 10 %, notamment de moins de 5 %, d'une fréquence de résonance de l'un des modes de vibration d'onde de Lamb par rapport à la même fréquence de résonance.

4. Système de mesure selon la revendication 2 et 3,

   - pour lequel la fréquence centrale, $f_{0,A}$, de la largeur de bande de 6 dB, $BW_{A,6dB}$, du premier transducteur à ultrasons (A) s'écarte de la fréquence de résonance du mode de vibration d'onde de Lamb de plus de 5 % de la même fréquence de résonance ; et/ou
   - pour lequel la fréquence centrale, $f_{0,B}$, de la largeur de bande de 6 dB, $BW_{B,6dB}$, du deuxième transducteur à ultrasons (B) s'écarte de la fréquence de résonance du mode de vibration d'onde de Lamb de plus de 5 % de la même fréquence de résonance.

5. Système de mesure selon l'une des revendications précédentes,

   - pour lequel l'électronique d'exploitation et de mesure est conçue pour déterminer un spectre d'amplitude, $|Y_B|$, du signal de réception, $y_B(t)$, du deuxième transducteur à ultrasons (B) ; et/ou
   - pour lequel l'électronique d'exploitation et de mesure est conçue pour déterminer une puissance et/ou une amplitude de la composante de signal dominante ($y_B$') du signal de réception, $y_B(t)$, du deuxième transducteur à ultrasons (B), notamment sur la base d'un spectre d'amplitude, $|Y_B|$, du signal de réception, $y_B(t)$ ; et/ou
   - pour lequel l'électronique d'exploitation et de mesure est conçue pour déterminer la fréquence de la composante de signal dominante ($y_B$') du signal de réception, $y_B(t)$, du deuxième transducteur à ultrasons (B), notamment sur la base d'un spectre d'amplitude, $|Y_B|$, du signal de réception, $y_B(t)$ ; et/ou
   - pour lequel l'électronique d'exploitation et de mesure est conçue pour moduler la tension du signal d'attaque, $x_A(t)$, pour le premier transducteur à ultrasons (A), notamment pour la cadencer et/ou de telle sorte que la tension en question soit formée d'une suite de paquets d'impulsions présentant respectivement deux ou plusieurs impulsions de tension rectangulaires et/ou se succédant à un intervalle de temps prédéfini.

6. Système de mesure selon l'une des revendications précédentes,

   - pour lequel l'électronique d'exploitation et de mesure est conçue pour moduler la tension électrique du signal d'attaque, $x_A(t)$, pour le premier transducteur à ultrasons (A), de telle sorte que la tension électrique soit formée d'une suite d'impulsions de tension, notamment formées en paquets d'impulsions et/ou rectangulaires et se succédant à un intervalle de temps prédéfini ;
   - et pour lequel l'électronique d'exploitation et de mesure est conçue pour modifier dans le temps la fréquence de la composante de signal dominante ($x_A$') du signal d'attaque, $x_A(t)$, pour le premier transducteur à ultrasons (A), en ce que des impulsions de tension générées successivement dans le temps présentent des largeurs d'impulsion différentes.

7. Système de mesure selon l'une des revendications précédentes, pour lequel l'électronique d'exploitation et de mesure est conçue pour générer le signal d'attaque, $x_A(t)$, pour le premier transducteur à ultrasons (A) de telle sorte que la composante de signal dominante ($x_A'$) dudit signal d'attaque, $x_A(t)$, présente d'abord une fréquence initiale, à savoir une fréquence ajustée à une valeur de fréquence de départ prédéfinie, notamment déterminée au préalable sur la base de données caractéristiques du tube et/ou d'au moins une valeur caractéristique d'au moins un des transducteurs à ultrasons et/ou conservée dans une mémoire de données non volatile de l'électronique d'exploitation et de mesure, de telle sorte qu'un écart de la même fréquence initiale de la composante de signal dominante ($x_A'$) du signal d'attaque, $x_A(t)$, pour le premier transducteur à ultrasons (A) par rapport à la fréquence, $f_{yB'}$, de la composante de signal dominante ($y_B'$) du signal de réception, $y_B(t)$, du deuxième transducteur à ultrasons (B) soit supérieur à un écart minimal pouvant être atteint momentanément à cet effet, et/ou de telle sorte qu'un écart de la fréquence, $f_{xA}$, de la composante de signal dominante ($x_A'$) du signal d'attaque, $x_A(t)$, pour le premier transducteur à ultrasons (A) par rapport à la fréquence, $f_{yB'}$, de la composante de signal dominante ($x_B'$) du signal de réception, $y_B(t)$, du deuxième transducteur à ultrasons (B) est initialement supérieur à $|\pm 100\ kHz|$ et/ou supérieur à 10 % de la fréquence, $f_{yB'}$, de la composante de signal dominante ($y_B'$) du signal de réception, $y_B(t)$, du deuxième transducteur à ultrasons (B).

8. Système de mesure selon la revendication précédente, pour lequel l'électronique d'exploitation et de mesure est conçue pour modifier, à partir de la même fréquence initiale, la fréquence, $f_{xA'}$, de la composante de signal dominante ($x_A'$) du signal d'attaque, $x_A(t)$, pour le premier transducteur à ultrasons (A), notamment à augmenter successivement ou à diminuer successivement, au moins jusqu'à ce que la fréquence, $f_{xA'}$, de la composante de signal dominante ($x_A'$) du signal d'attaque, $x_A(t)$, pour le premier transducteur à ultrasons (A) ne diffère pas de plus de $|\pm 100\ kHz|$, notamment de moins de $|\pm 50\ kHz|$, par rapport à la fréquence, $f_{yB'}$, de la composante de signal dominante ($y_B'$) du signal de réception, $y_B(t)$, du deuxième transducteur à ultrasons (B) et/ou de pas plus de 10 %, notamment de moins de 5 %, de la fréquence, $f_{yB'}$, de la composante de signal dominante ($y_B'$) du signal de réception, $y_B(t)$, du deuxième transducteur à ultrasons (B), par rapport à la même fréquence $f_{yB'}$, et/ou jusqu'à ce qu'un écart initialement trop important de la fréquence, $f_{xA'}$, de la composante de signal dominante ($x_A'$) du signal d'attaque, $x_A(t)$, pour le premier transducteur à ultrasons (A), par rapport à la fréquence, $f_{yB'}$, de la composante de signal dominante ($y_B'$) du signal de réception, $y_B(t)$, du deuxième transducteur à ultrasons (B) est réglé sur un écart minimal (*Err_f*) pouvant être atteint momentanément à cet effet.

9. Système de mesure selon l'une des revendications précédentes,

- pour lequel le deuxième transducteur à ultrasons est conçu pour convertir une tension électrique variant dans le temps en ondes ultrasonores se propageant à travers la paroi du tube et plus loin à travers le fluide guidé dans le canal intérieur du tube, et
- pour lequel le premier transducteur à ultrasons est conçu pour recevoir et convertir en une tension électrique variant dans le temps des ondes ultrasonores se propageant à travers le fluide guidé dans le canal intérieur du tube et plus loin à travers la paroi du tube.

10. Système de mesure selon l'une des revendications précédentes, pour lequel l'électronique d'exploitation et de mesure est conçue pour, afin de produire un signal de réception, $y_A(t)$, du premier transducteur à ultrasons (A) présentant une tension électrique variant dans le temps, $u_{A,II}$, au moins temporairement, notamment de manière complémentaire au signal d'attaque, $x_A(t)$, pour le premier transducteur à ultrasons (A), un signal d'attaque, $x_B(t)$, pour le deuxième transducteur à ultrasons (B), présentant une tension électrique, $u_{B,I}$, variable dans le temps, notamment bipolaire et/ou puisée, notamment complémentaire au signal d'attaque pour le premier transducteur à ultrasons (A), au moins pour un intervalle de temps prédéfini.

11. Système de mesure selon la revendication précédente,

- pour lequel l'électronique d'exploitation et de mesure est conçue pour générer l'au moins une valeur mesurée aussi bien au moyen du signal de réception, $y_B(t)$, du deuxième transducteur à ultrasons (B) qu'au moyen du signal de réception, $y_A(t)$, du premier transducteur à ultrasons (A), notamment sur la base d'une différence de temps de propagation, déterminée à l'aide du signal de réception, $y_B(t)$, du deuxième transducteur à ultrasons (B) et du signal de réception, $y_A(t)$, du premier transducteur à ultrasons (A), entre des ondes ultrasonores se propageant, toutefois dans des directions opposées, à travers le fluide guidé dans le canal intérieur du tube le long d'une section de mesure prédéfinie, et/ou sur la base d'une corrélation croisée du signal de réception, $y_B(t)$, du deuxième transducteur à ultrasons (B) et du signal de réception, $y_A(t)$, du premier transducteur à ultrasons (A) ; et/ou

- pour lequel l'électronique d'exploitation et de mesure est conçue pour générer l'au moins une valeur mesurée aussi bien au moyen du signal d'attaque, $x_A(t)$, pour le premier transducteur à ultrasons (A) ainsi que du signal de réception, $y_B(t)$, du deuxième transducteur à ultrasons (B) qu'au moyen du signal d'attaque, $x_A(t)$, pour le deuxième transducteur à ultrasons (B) ainsi que du signal de réception, $y_B(t)$, du premier transducteur à ultrasons (A), notamment sur la base aussi bien d'un temps de propagation déterminé à l'aide du signal d'attaque, $x_A(t)$, pour le premier transducteur à ultrasons (A) et du signal de réception, $y_B(t)$, du deuxième transducteur à ultrasons (B) pour des ondes ultrasonores se propageant à travers le fluide guidé dans le canal intérieur du tube le long d'une section de mesure prédéfinie en direction du premier transducteur à ultrasons (A) vers le deuxième transducteur à ultrasons (B), que sur la base d'un temps de propagation déterminé à l'aide du signal d'attaque, $x_B(t)$, pour le deuxième transducteur à ultrasons (B), et du signal de réception, $y_A(t)$, du premier transducteur à ultrasons (A) pour les ondes ultrasonores se propageant à travers le fluide guidé dans le canal intérieur du tube le long de la même section de mesure dans la direction du deuxième transducteur à ultrasons (B) vers le premier transducteur à ultrasons (A) ; et/ou

- pour lequel l'électronique d'exploitation et de mesure est conçue pour générer le signal d'attaque, $x_B(t)$, pour le deuxième transducteur à ultrasons (B) de telle sorte qu'aussi bien le signal d'attaque, $x_B(t)$, que le signal de réception, $y_A(t)$, du premier transducteur à ultrasons (A) contiennent chacun une pluralité de composantes de signal spectrales ($x_{B, i}$, $y_{A,i}$), cependant chacun une composante de signal spectrale dominante ($x_B'$, $y_A'$), à savoir présentant une densité de puissance spectrale maximale ($S_{xxS,MAX}$, $S_{yyA,MAX}$) ; et/ou

- pour lequel l'électronique d'exploitation et de mesure est conçue pour générer le signal d'attaque, $x_B(t)$, pour le deuxième transducteur à ultrasons (B) de manière complémentaire au signal d'attaque, $x_A(t)$, pour le premier transducteur à ultrasons (A) ; et/ou

- pour lequel l'électronique d'exploitation et de mesure est conçue pour générer le signal d'attaque, $x_B(t)$, pour le deuxième transducteur à ultrasons (B) de telle sorte qu'une fréquence, $f_{xB'}$, de la composante de signal dominante ($x_B'$) du signal d'attaque, $x_B(t)$, pour le deuxième transducteur à ultrasons (B) ne diffère pas de plus d'une valeur de $|\pm 100\ kHz|$, notamment d'une valeur inférieure à $|\pm 50\ kHz|$, par rapport à une fréquence, $f_{yA}$, de la composante de signal dominante ($y_A'$) du signal de réception, $y_A(t)$, du premier transducteur à ultrasons (A) et/ou de pas plus de 10 %, notamment de moins de 5 %, de la fréquence, $f_{yA}$, de la composante de signal dominante ($y_A'$) du signal de réception du premier transducteur à ultrasons (A) par rapport à la même fréquence, $f_{yA}$ ; et/ou

- pour lequel l'électronique d'exploitation et de mesure est conçue pour générer le signal d'attaque, $x_A(t)$, pour le premier transducteur à ultrasons (A) et le signal d'attaque, $x_B(t)$, pour le deuxième transducteur à ultrasons (B), respectivement de telle sorte qu'une fréquence, $f_{xB'}$, de la composante de signal dominante ($x_B'$) du signal d'attaque, $x_B(t)$, pour le deuxième transducteur à ultrasons (B), diffère d'une valeur qui n'est pas supérieure à $|\pm 50\ kHz|$, notamment d'une valeur inférieure à $|\pm 10\ KHz|$, par rapport à une fréquence, $f_{yA}$, de la composante de signal dominante ($x_A'$) du signal d'attaque, $x_A(t)$, pour le premier transducteur à ultrasons (A) et/ou de pas plus de 1 % de la fréquence, $f_{xA'}$, de la composante de signal dominante ($x_A'$) du signal d'attaque, $x_A(t)$, pour le premier transducteur à ultrasons (A), par rapport à la même fréquence, $f_{xA'}$.

**12.** Système de mesure selon l'une des revendications 10 à 11,

- pour lequel l'électronique d'exploitation et de mesure est conçue pour convertir le signal de réception, $y_A(t)$, du premier transducteur à ultrasons (A) en un signal de réception numérique, $Y_{Ad}$, représentant le même signal de réception, $y_A(t)$,
- et pour lequel l'électronique d'exploitation et de mesure est conçue pour générer l'au moins une valeur mesurée pour l'au moins un paramètre au moyen du signal de réception numérique, $y_{Ad}$, représentant le signal de réception $y_A(t)$ du premier transducteur à ultrasons (A).

**13.** Système de mesure selon l'une des revendications précédentes,

- pour lequel l'électronique d'exploitation et de mesure est conçue pour convertir le signal de réception, $y_B(t)$, du deuxième transducteur à ultrasons (B) en un signal de réception numérique, $y_{Bd}$, représentant le même signal de réception, $Y_B(t)$,
- et pour lequel l'électronique d'exploitation et de mesure est conçue pour générer l'au moins une valeur mesurée pour l'au moins un paramètre au moyen du signal de réception numérique, $y_{Bd}$, représentant le signal de réception $y_B(t)$ du deuxième transducteur à ultrasons (B).

**14.** Système de mesure selon l'une des revendications précédentes, pour lequel l'électronique d'exploitation et de mesure comporte une mémoire de données, notamment non volatile, laquelle mémoire est destinée à mémoriser des données numériques, notamment au moins une valeur de paramètre pour au moins un paramètre de réglage caractérisant le signal d'attaque pour le premier transducteur à ultrasons (A).

**15.** Système de mesure selon la revendication précédente, pour lequel l'électronique d'exploitation et de mesure est conçue pour mémoriser de manière répétitive dans une mémoire de données des valeurs de paramètres pour au moins un paramètre de réglage caractérisant le signal d'attaque pour le premier transducteur à ultrasons (A), notamment à chaque fois en même temps qu'une valeur de temps représentant un moment d'un réglage ou d'une mémorisation de la valeur de paramètre respective.

**16.** Système de mesure selon la revendications précédente,

- pour lequel l'électronique d'exploitation et de mesure est conçue pour effectuer, en utilisant des valeurs de paramètres mémorisées dans la mémoire de données (MEM) pour l'au moins un paramètre de réglage caractérisant le signal d'attaque pour le premier transducteur à ultrasons (A), un contrôle d'une capacité de fonctionnement du système de mesure, notamment un contrôle d'une capacité de fonctionnement du premier transducteur à ultrasons (A) et/ou du deuxième transducteur à ultrasons (B), et/ou un contrôle d'une intégrité du tube ; et/ou
- pour lequel l'électronique d'exploitation et de mesure est conçue pour détecter, en utilisant au moins une valeur de paramètre mémorisée dans la mémoire de données pour l'au moins un paramètre de réglage caractérisant le signal d'attaque pour le premier transducteur à ultrasons (A), une dégradation du tube, notamment une modification d'une épaisseur de la paroi du tube, et/ou une modification d'une fonction de transmission d'au moins l'un des deux transducteurs à ultrasons.

**17.** Système de mesure selon l'une des revendications précédentes,

- pour lequel le premier transducteur à ultrasons est conçu pour fonctionner de manière intermittente en tant qu'un émetteur convertissant la puissance électrique en puissance acoustique ou en tant qu'un récepteur convertissant la puissance acoustique en puissance électrique ; et/ou
- pour lequel le deuxième transducteur à ultrasons est conçu pour fonctionner de manière intermittente, notamment de manière complémentaire au premier transducteur à ultrasons, en tant qu'un récepteur convertissant la puissance acoustique en puissance électrique ou en tant qu'un émetteur convertissant la puissance électrique en puissance acoustique.

**18.** Utilisation d'un système de mesure selon l'une des revendications précédentes, lequel système est destiné à la mesure d'une vitesse d'écoulement et/ou d'un débit volumique et/ou une densité d'un fluide, notamment d'un liquide, d'un gaz ou d'une dispersion, s'écoulant dans une conduite.

Fig. 1b

Fig. 1a

Fig. 2b

Fig. 2a

**Fig. 3a**

**Fig. 3b**

EP 3 298 354 B1

Fig. 4b

Fig. 4a

$(S_0, S_1, S_2, ...S_n, A_0, A_1, A_2, ...A_n)$

$x_A(t)$

$\Delta\alpha_F = \alpha_F - \alpha_{F,nom}$

$\Delta L = L - L_{nom}$

D

*Fig. 5*

Fig. 6a

Fig. 6b

**IN DER BESCHREIBUNG AUFGEFÜHRTE DOKUMENTE**

**In der Beschreibung aufgeführte Patentdokumente**

- DE 10057188 A
- DE 102007062913 A
- US 4930358 A
- US 20140366642 A
- US 20140123767 A
- WO 03098166 A
- WO 2007012506 A
- WO 2009156250 A
- WO 2012120039 A
- WO 2013029664 A
- WO 2013079264 A

**In der Beschreibung aufgeführte Nicht-Patentliteratur**

- **BERNHARD FUNCK ; ANDREAS MITZKUS.** Acoustic Transfer Function ofthe Clamp-On Flowmeter. *IEEE TRANSACTIONS ON ULTRASONICS, FERROELECTRICS, AND FREQUENCY CONTROL,* Juli 1996, vol. 43 (4
- **BERNHARD FUNCK ; ANDREAS MITZKUS.** Acoustic Transfer Function of the Clamp-On Flowmeter. *IEEE TRANSACTIONS ON ULTRASONICS, FERROELECTRICS, AND FREQUENCY CONTROL,* Juli 1996, vol. 43 (4